# EUROPEAN PATENT APPLICATION

(11) **EP 4 753 211 A1**
(43) Date of publication of application: **03.06.2026**
(21) Application number: 25216822.4
(22) Date of filing: 19.11.2025
(51) Int. Cl.: H04L 9/40, G06F 21/44

(54) **REGISTRATION-BASED APPLICATION AUTHENTICATION**

(30) Priority: 27.11.2024 US 202418962075
(71) Applicant: Microsoft Technology Licensing, LLC, Redmond, WA 98052 (US)
(72) Inventor: KOREN, Adi, Redmond, 98052-6399 (US); EDRY, Dor, Redmond, 98052-6399 (US); KRISPIN, David, Redmond, 98052-6399 (US); SHACHOR, Gal Asher, Redmond, 98052-6399 (US)
(74) Representative: CMS Cameron McKenna Nabarro Olswang LLP

(57) **Abstract**

Techniques are directed to application authentication based on registration with an application registration service. In an example, an application frontend registers with the application registration service and receives a registration key. The application frontend provides a proof of possessing the registration key and a credential of application frontend or an associated account to an authentication service. The authentication service determines an authenticity of the application frontend or the account based on the credential and determines a validity of the proof of possession. Responsive to the authentication and validation, the authentication service provides an artifact to application frontend. The application frontend utilizes the artifact to access an application backend and/or a resource thereof. The artifact is bound to a particular instance of the application frontend in a manner that prevents other instances of the application frontend not possessing the registration key from utilizing the artifact to access the application backend.

## Description

### BACKGROUND

Browsers utilize authentication tokens in order to access backend applications and/or resources thereof. The authentication tokens are presented to an application backend or a service that manages access to the application backend in order to attest authenticity of the browser or an account associated with the browser. Malicious entities, such as hackers, attempt to gain access to these authentication tokens in order to access a user or service's secrets and/or sensitive data.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Embodiments described herein provide authentication of applications based on registration with an application registration service. For instance, in an aspect, a proof code and a credential are received from a first instance of an application frontend. The credential is authenticated and an authentication artifact is generated indicating the credential is authenticated. An ownership validator is caused to validate the proof code and generate a validated authentication artifact based on the validation and the authentication artifact. The validated authentication artifact is provided to the first instance for use thereof.

In a further aspect, the validated authentication artifact is generated by digitally signing the authentication artifact.

In a further aspect, the validated authentication artifact is received from the first instance in an access request. Responsive to validating the authentication artifact, access to a backend application is provided to the first instance.

In a further aspect, the validated authentication artifact is validated based on a binding of the validated authentication artifact to the first instance.

In a further aspect, the proof code indicates the first instance has access to a registration key.

In a further aspect, a registration request is received from the first instance. A registration token is generated based on a credential included in the registration request. A key request is received from the first instance, the key request comprising the registration token and a registration code. The registration key is released to the first instance responsive to validation of the registration token and the registration code.

In a further aspect, an admin computing device is caused to provide the registration code to the first instance.

In another aspect, a client computing device generates a proof code indicating the client computing device has access to a registration key. An application frontend executing on the client computing device provides the proof code to an authentication service, causing the authentication service to determine a validity of the proof code. Responsive to providing the proof code to the authentication service, the application frontend receives a validated authentication artifact. The application frontend transmits the validated authentication artifact to an application backend in an access request.

In a further aspect, the application frontend receives a resource in response to the access request.

In a further aspect, the application frontend provides a registration code to an application registration service and, responsive to the application registration service authenticating the registration code, receives the registration key from the application registration service.

In a further aspect, the application frontend causes the authentication service to determine a validity of the proof code without providing the authentication service access to the registration key.

### BRIEF DESCRIPTION OF THE DRAWINGS/FIGURES

The accompanying drawings, which are incorporated herein and form a part of the specification, illustrate embodiments and, together with the description, further serve to explain the principles of the embodiments and to enable a person skilled in the pertinent art to make and use the embodiments.
FIG. 1 shows a block diagram of an example system for registering an application, authenticating the application, and providing the application access to an application backend, in accordance with an example embodiment.
FIG. 2 shows a sequence diagram that illustrates a process for registering an application, in accordance with an example embodiment.
FIG. 3 shows a flowchart of a process for authenticating an application for registration, in accordance with an example embodiment.
FIG. 4 shows a flowchart of a process for providing a registration code, in accordance with an example embodiment.
FIG. 5 shows a flowchart of a process for prompting an admin computing device, in accordance with an example embodiment.
FIG. 6 shows a flowchart of a process for registering an application, in accordance with an example embodiment.
FIG. 7 shows a sequence diagram that illustrates a process for authenticating an application and providing the application access to an application backend, in accordance with an example embodiment.
FIG. 8A shows a flowchart of a process for authenticating an application, in accordance with an example embodiment.
FIG. 8B shows a flowchart of a process for causing proof code validation, in accordance with an example embodiment.
FIG. 8C shows a flowchart of a process for causing proof code validation, in accordance with another example embodiment.
FIG. 9 shows a flowchart of a process for validating an access request, in accordance with an example embodiment.
FIG. 10 shows a flowchart of a process for providing an application access to an application backend, in accordance with an example embodiment.
FIG. 11 shows a flowchart of a process for authenticating an application and validating an access request, in accordance with an example embodiment.
FIG. 12 shows a flowchart of a process for generating a proof code, in accordance with an example embodiment.
FIG. 13 shows a block diagram of a system for determining whether or not an access request is valid, in accordance with an example embodiment.
FIG. 14 shows a flowchart of a process for determining an access request is invalid, in accordance with an example embodiment.
FIG. 15 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Embodiments of Application Authentication

Embodiments of the present disclosure relate to authentication of application frontends. An application frontend is an application executed on a client computing device, also referred to as a "client-side application". An application frontend has an associated application backend. In an implementation, an application frontend is a browser application. An application frontend allows a user to access application backends (e.g., web applications and/or the like), also referred to as "server-side applications". In implementations, access policies are utilized to determine whether or not an application frontend or user account is authorized to access an application backend. For instance, in implementations, an access policy requires an application frontend to present an authentication token in order to access the application backend or resources thereof.

Malicious entities, such as hackers, attempt to gain access to backend applications and/or resources in various ways. For instance, a malicious entity can attempt to access a backend application or resource by obtaining (e.g., stealing) authentication tokens from an application frontend or user account. In an example, a malicious entity obtains the authentication token by intercepting communication with the application frontend. Depending on the access policy, a malicious entity can utilize the stolen authentication token to access an application backend, including sensitive resources and information accessible to the application backend.

Embodiments of the present disclosure provide enhanced security through application registration. In some examples, an artifact validator is utilized to manage access to an application backend and/or its resources. The artifact validator is configured to authorize access to an application backend (e.g., only) if a requesting application frontend has registered with an application registration service. In an aspect, the artifact validator receives an artifact from the application frontend. The artifact validator determines if the artifact indicates the requesting application frontend has registered with the application registration service and obtained validation by an authentication service. If so, the artifact validator allows the application frontend to access the application backend and/or its resources. Otherwise, the artifact validator prevents access to the application backend. In a further aspect, the artifact is bound to the particular instance of the application frontend. By binding the artifact in this manner and determining whether or not to authorize access based on the binding, embodiments described herein improve security of computing systems. For instance, such an embodiment prevents a replay attack where a malicious entity gains access to the artifact and utilizes a different instance of an application frontend to attempt to access the application backend. In this replay attack example, the artifact validator determines the stolen artifact is not bound to the requesting application frontend and therefore prevents access. Furthermore, by binding the artifact to the particular instance of the application, even if the malicious entity obtains access to the credentials of the user account, the malicious entity is unable to access the application backend. Thus, embodiments further enhance security with respect to cyber attacks (e.g., ransomware attacks, replay attacks, and/or the like).

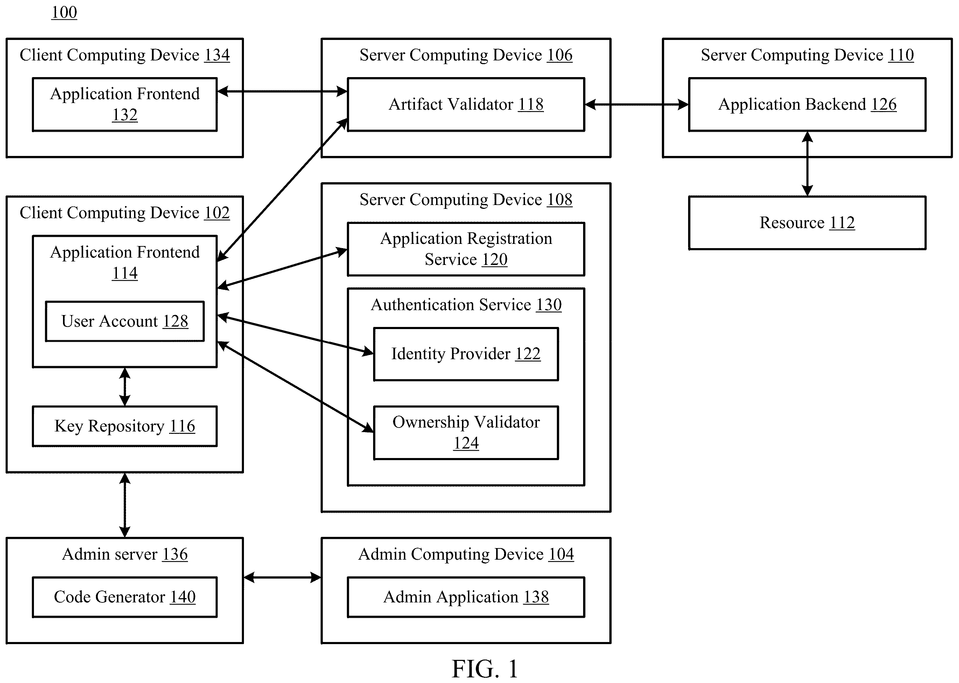

Embodiments described herein are configurable in various ways to authenticate an application based on whether or not it has registered with an application registration service. For example, FIG. 1 shows a block diagram of an example system 100 for registering an application, authenticating the application, and providing the application access to an application backend, in accordance with an example embodiment. As shown in FIG. 1, system 100 comprises a client computing device 102, an admin computing device 104, a server computing device 106 ("server 106" herein), a server computing device 108 ("server 108" herein), a server computing device 110 ("server 110" herein), a resource 112, a client computing device 134, and an admin server 136. In an embodiment, client computing device 102, admin computing device 104, server 106, server 108, server 110, resource 112, client computing device 134, and admin server 136 are communicatively coupled via a network (not shown in FIG. 1 for brevity). In examples, the network comprises one or more networks such as local area networks (LANs), wide area networks (WANs), enterprise networks, the Internet, etc. In examples, the network comprises one or more wired and/or wireless portions. The features of system 100 are described in detail as follows.

Client computing device 102, admin computing device 104, and client computing device 134 are each any type of stationary or mobile processing device, including, but not limited to, a desktop computer, a server, a mobile or handheld device (e.g., a tablet, a personal data assistant (PDA), a smart phone, a laptop, etc.), an Internet-of-Things (IoT) device, etc. In accordance with an embodiment, client computing device 102 is associated with a client user (e.g., an individual user, a group of users, an organization, a family user, a customer user, an employee user, a tenant user, etc.), admin computing device 104 is associated with an admin user (e.g., an individual administrative user (e.g., a manager of the client user, a team lead of the client user, an information technology (IT) user, and/or the like), a group of administrative users, an administrative organization, a family administrative user, a provider user, an employer user, a tenant administrative user, and/or any other type of user with administrative and/or management privileges over the client user or a user account of the client user), and client computing device 134 is associated with a client user (e.g., the same client user as client computing device 102 or another user different from the client user of client computing device 102). For instance, in an example scenario, client computing device 134 is associated with a malicious entity (e.g., a hacker).

Client computing device 102, admin computing device 104, and/or client computing device 134 are configured to execute applications. For example, as shown in FIG. 1, client computing device 102 executes an application frontend 114, admin computing device 104 executes an admin application 138, and client computing device 102 executes an application frontend 132. Examples of application frontend 114 and application frontend 132 include, but are not limited to, a web browser, a user-facing layer of an application, and/or another type of frontend application that a user is able to interact with via a respective client computing device (or that acts automatically (e.g., on behalf of a respective user or user account), e.g., according to rules). In an embodiment, a user is able to interact with application frontend 114 and/or application frontend 132 to access servers 106-110, services executed by servers 106-110, resource 112, admin server 136, and/or services executed by admin server 136. In an alternative or additional embodiment, application frontend 114 and/or application frontend 132 automatically operates to access servers 106-110, services executed thereby, resource 112, admin server 136, and/or services executed by admin server 136. In an embodiment, application frontend 114 and/or application frontend 132 is associated with one or more user accounts of the user. For instance, as shown in FIG. 1, application frontend 114 is associated with a user account 128. In an embodiment, application frontend 114 stores or otherwise accesses a credential of a corresponding user account (e.g., a credential of user account 128). In an embodiment, application frontend 114 is an instance of an application frontend, e.g., an instance of an **"Application A".** For instance, in an example, application frontend 114 is a first instance of **Application A** such that, if application frontend 114 is closed, rebooted, or otherwise terminated, a second instance of **Application A** is launched (e.g., as part of rebooting **Application A,** as part of a restarting of **Application A,** responsive to user or service interaction with client computing device 134 that causes launching of a new instance of **Application A,** and/or the like).

As described herein, application frontend 132 is an application frontend executed by client computing device 134. In an embodiment, a malicious entity utilizes application frontend 132 in an attempt to impersonate a user or user account associated with application frontend 114 (e.g., user account 128). For instance, as a non-limiting example, suppose a hacker intercepts communication with client computing device 102, accesses memory of client computing device 102, accesses a data store that stores credentials on behalf of user accounts, and/or otherwise obtains a credential of user account 128. In this example, the hacker utilizes application frontend 132 and the obtained credential to pose as the user of user account 128 in attempts to access application backend 126 and/or resource 112. As described elsewhere herein, embodiments of the present disclosure implement security features to prevent such a malicious entity from accessing application backend 126 and/or resource 112.

While application frontend 114 and application frontend 132 are shown as application frontends executing on respective client computing devices, in an alternative embodiment, application frontend 132 is executed on computing device 102. For instance, in an embodiment, application frontend 132 is a second instance of **Application A** executed by client computing device 102 on behalf of (or based on user interaction with client computing device 102 by the user associated with) user account 128. In another alternative, application frontend 132 is a remotely executed by a malicious entity (e.g., the malicious entity associated with client computing device 134) that has obtained remote access to client computing device 102.

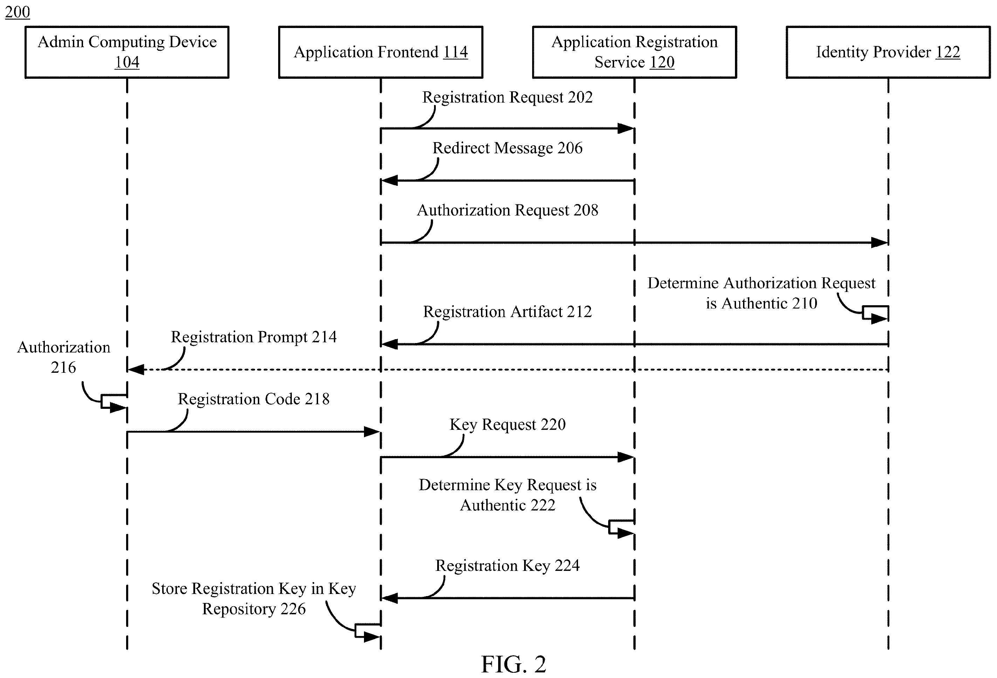

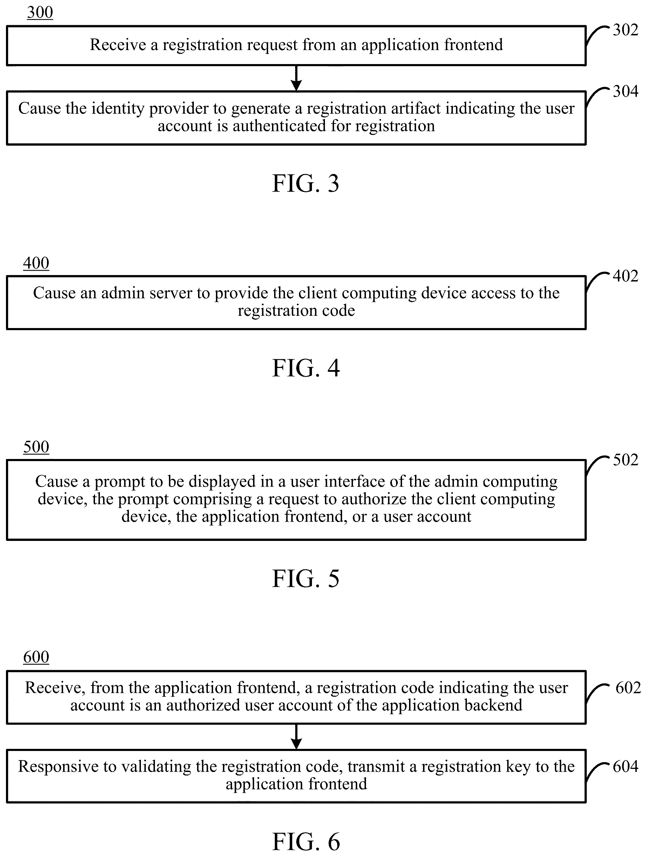

As described above, admin computing device 104 executes an admin application 138. Examples of admin application 138 include, but are not limited to, a web browser, a user-facing layer of an application, a management application, and/or another type of application that an admin user is able to interact with via admin computing device 104 (or that operates automatically (e.g., on behalf of an admin user or an admin user account), e.g., according to rules). In an embodiment, an admin user is able to interact with admin application 138 to access servers 106-110, services executed by servers 106-110, resource 112, admin server 136, and/or services executed by admin server 136. In an alternative or additional embodiment, admin application 138 operates automatically to access such services or devices. In an embodiment, admin application 138 is associated with a user account of an admin user (e.g., a manager of the user associated with user account 128). In an embodiment, admin application 138 is configured to authorize client computing device 102, application frontend 114, and/or user account 128 (e.g., as further described with respect to FIGS. 4 and 5, as well as elsewhere herein). In an embodiment, admin application 138 comprises a user interface that displays a prompt comprising a request to authorize client computing device 102, application frontend 114, and/or user account 128 (e.g., as further described with respect to FIG. 5, as well as elsewhere herein). In embodiments, and as further described with respect to FIGS. 2, 4, and 5 (as well as elsewhere herein), admin application 138 generates, provides, and/or causes generation of a registration code that attests to the authenticity of client computing device 102, application frontend 114, and/or user account 128.

Client computing device 102, admin computing device 104,and/or client computing device 134 are also configured to store data. For example, as shown in FIG. 1, client computing device 102 comprises a key repository 116. In an embodiment, key repository 116 is a portion of a memory device of client computing device 102. Alternatively, key repository 116 is an external memory device communicatively coupled to client computing device 102. In another alternative embodiment, key repository 116 is a portion of working memory of application frontend 114 (e.g., a cache of application frontend 114). Key repository 116 is configured to store keys issued to or otherwise accessible to client computing device 102 and/or application frontend 114. In an embodiment, key repository 116 is bound to or otherwise (e.g., only) accessible to application frontend 114 (e.g., and not accessible to other instances of **Application A**). In another embodiment, key repository 116 is bound to or otherwise (e.g., only) accessible to client computing device 102 and applications executing thereon. In another example, a portion of data stored by key repository 116 is bound to or otherwise (e.g., only) accessible to a corresponding application frontend. For instance, in an embodiment, a first key (not shown in FIG. 1 for brevity) stored in key repository 116 is bound to application frontend 114 (and not accessible to another application executed by client computing device 102 (e.g., a subsequent instance of **Application A**) and/or the like) and a second key (not shown in FIG. 1 for brevity) stored in key repository 116 is bound to a different application executed by client computing device 102 not shown in FIG. 1 (and not accessible to application frontend 114). In another embodiment, keys stored in key repository 116 are encrypted in a manner that prevents access to unencrypted versions of the keys except by the bound application or device. For instance, in an embodiment, a key stored in key repository 116 is encrypted in a manner that (e.g., only) application frontend 114 is able to decrypt (e.g., using a private key kept secret to application frontend 114) but another application (e.g., application frontend 132 without access to the private key of application frontend 114) is unable to decrypt.

Server 106, server 108, and server 110 (collectively referred to as "servers 106-110" herein), as well as admin server 136, are each any type of stationary or mobile processing device, system of multiple devices, and/or the like. In an embodiment, one or more of servers 106-110 and/or admin server 136 are included in a network-accessible server set (e.g., a cloud-based environment, a cloud-based platform, an enterprise platform, an enterprise environment, and/or the like). Depending on the implementation two or more of servers 106-110 and/or admin server 136 are included in the same network-accessible server set. Alternatively, each of servers 106-110 and admin server 136 are included in different network-accessible server sets. In some embodiments, two or more of servers 106-110 and/or admin server 136 are grouped in a cluster. In an implementation, two or more of servers 106-110 and/or admin server 136 are collocated (e.g., housed in one or more nearby buildings with associated components such as backup power supplies, redundant data communications, environmental controls, etc.) to form a datacenter.

In embodiments, servers 106-110 and/or admin server 136 are configured to host and/or otherwise manage one or more resources. Examples of resources include, but are not limited to, information objects (e.g., documents, Web pages, images, audio files, video files, outputs of an executable), applications (e.g., cloud applications, enterprise applications, virtual machines, and/or the like), services (e.g., cloud services, enterprise services, security services, and/or the like), physical devices (e.g., storage disks, accelerators, and/or the like), and/or any other asset a server can be configured to host or otherwise provide access thereto. For instance, as shown in FIG. 1, server 106 is configured to host an artifact validator 118, server computing device 108 is configured to host an application registration service 120 and an authentication service 130, server computing device 110 is configured to host an application backend 126, and admin server 136 is configured to host a code generator 140, each of which are implemented as a service executed by a respective server, a component (e.g., a system-on-chip (SoC) of a respective server, and/or a combination of a service and component of the respective server. Services and/or components of servers can comprise one or more subservices and/or subcomponents. For instance, as shown in FIG. 1, authentication service 130 comprises an identity provider 122 and an ownership validator 124, each of which are integrated as subservices of authentication service 130. In some embodiments, one or more of servers 106-110 and/or admin server 136 are configured to store resources accessible to other servers, applications executed on the other servers, and/or computing devices such as client computing device 102, admin computing device 104, and/or client computing device 134.

Resource 112 is any type of resource of system 100, as described herein. In embodiments, resource 112 is protected by an access policy. For instance, in an implementation, resource 112 is protected by an access policy that requires an application frontend to register and attest ownership of a registration key prior to accessing resource 112. In embodiments, and as shown in FIG. 1, application backend 126 is configured to access and/or otherwise manage resource 112. In some embodiments, access to application backend 126 is also protected by the access policy.

Artifact validator 118 is a computer-implemented system that is configured to validate requests to access application backend 126 and/or resources thereof (e.g., resource 112). In embodiments, artifact validator 118 is configured to authenticate a credential of a requesting application, a user account associated therewith, an artifact (e.g., a token) included in the request, and/or any other information associated with the access request. In an implementation, artifact validator 118 is implemented in a proxy service or by a proxy computing device communicatively coupled between application frontend 114 and application backend 126. While artifact validator 118 is shown as separate from application backend 126, in an alternative embodiment, artifact validator 118 is a sub-service of application backend 126. In another alternative, artifact validator 118 is a client-side validation service executed by client computing device 102 (e.g., as a separate service from application frontend 114 or as a subservice of application frontend 114). While a single application backend is shown in FIG. 1 coupled to artifact validator 118, it is contemplated herein that some embodiments of artifact validators validate access requests to multiple (e.g., different) application backends.

Application registration service 120 is a service executed by server computing device 108 that is configured to register an application frontend for accessing application backends. In an example implementation, application registration service 120 is a trusted application registration service 120.

Authentication service 130 is a computer-implemented system that is configured to authenticate application frontends and/or associated user accounts. While authentication service 130 is illustrated as separate from application registration service 120, in an alternative embodiment, application registration service 120 and authentication service are integrated as a registration and authentication service. Furthermore, in some embodiments, authentication service 130 and/or application registration service 120 are integrated with artifact validator 118.

As shown in FIG. 1, authentication service 130 comprises identity provider 122 and ownership validator 124. Identity provider 122 is a computer-implemented system that is configured to create, maintain, and manage identity information associated with a user, user account, application, and/or a client computing device. In embodiments, identity provider 122 provides authentication services to relying applications.

Ownership validator 124 is a computer-implemented system that is configured to determine whether or not an application frontend has registered with application registration service 120. Depending on the implementation, ownership validator 124 is a trusted or un-trusted ownership validator. In an embodiment, ownership validator 124 verifies registration of application frontend 114 utilizing a proof code.

Code generator 140 is a computer-implemented system that is configured to generate or otherwise provide a registration code to a client computing device or to an application frontend executing on a client computing device. In an embodiment, code generator 140 generates the code responsive to an instruction received from an admin application (e.g., admin application 138).

Thus, the components and services of an example system for registering an application, authenticating the application, and providing the application access to an application backend have been described with respect to FIG. 1. In embodiments, the components and/or services operate in various manners to register an application, authenticate the application, and/or provide the application access to an application backend and/or a resource thereof. Examples of these operations, as well as further example systems and sub-systems, are described in the following Section(s).

### III. Example Application Registration Embodiments

As described herein, a resource or application backend can be protected by an access policy that requires an application frontend to register with an application registration service. Embodiments can operate to register applications in various ways. For instance, with reference to the context of system 100 of FIG. 1, an exemplary process for registering application frontend 114 will now be described in reference to FIG. 2. FIG. 2 shows a sequence diagram 200 that illustrates a process for registering an application (e.g., application frontend 114), in accordance with an example embodiment. In an embodiment, system 100 operates in accordance with the steps of sequence diagram 200. Note that not all steps of sequence diagram 200 need be performed in all embodiments. Sequence diagram 200 is described as follows with respect to FIG. 1.

As shown in sequence diagram 200, the process begins with application frontend 114 transmitting a registration request 202. In an embodiment, registration request 202 comprises an application identifier that uniquely identifies application frontend 114, an instance identifier that uniquely identifies the particular instance of application frontend 114, a user identifier that uniquely identifies user account 128, and/or any other information associated with application frontend 114. In accordance with an embodiment, application frontend 114 transmits registration request 202 responsive to user input to application frontend 114 (e.g., via client computing device 102), e.g., a key stroke, a mouse click, interaction with a user interface, a touch of a touch screen of client computing device 102, and/or the like. In accordance with an embodiment, application frontend 114 transmits registration request 202 responsive to a redirect message received from application backend 126 and/or artifact validator 118 (e.g., after unsuccessfully attempting to access application backend 126 and/or a resource thereof).

In embodiments, responsive to receiving registration request 202, application registration service 120 determines registration of application frontend 114 requires authentication of (e.g., a credential associated with) application frontend 114. For example, application registration service 120 in an implementation determines that a registration artifact is required because application frontend 114 has not yet provided one or because a previously provided registration artifact has expired. In an embodiment, application registration service 120 determines a unform resource locator (URL) of identity provider 122. In accordance with an embodiment, application registration service 120 redirects application frontend 114 to identity provider 122. For instance, as shown in FIG. 2, application registration service 120 sends a redirect message 206 to application frontend 114. Redirect message 206 is configured to redirect application frontend 114 to identity provider 122. In an embodiment, redirect message 206 comprises the URL of identity provider 122. In an alternative, optional implementation where registration request 202 comprises a credential of user account 128 and/or application frontend 114, application registration service 120 forwards registration request 202 as an authorization request. In another alternative, application registration service 120 causes identity provider 122 to issue a challenge to application frontend 114 for authorization of application frontend 114 or user account 128.

Responsive to receiving redirect message 206, application frontend 114 transmits an authorization request 208 to identity provider 122. Authorization request 208 comprises a credential of application frontend 114 and/or user account 128. In certain implementations, authorization request 208 comprises multiple communications. For example, application frontend 114 in an implementation initiates a first communication to identity provider 122. Responsive to receiving the first communication, identity provider 122 interacts with application frontend 114 to obtain the credential as part of a second communication therefrom (e.g., by causing a user interface to be presented in a user interface of application frontend 114 via which a user can submit the credential to identity provider 122, by obtaining a cookie that is stored in a cache of application frontend 114, by obtaining other information from client computing device 102, and/or the like).

Responsive to receiving authorization request 208 (or a prompt from application registration service 120, not shown in FIG. 2), identity provider 122 evaluates certain information included in the request to make a determination 210 that the authorization request is authentic. For instance, in accordance with an embodiment, identity provider 122 accesses a directory that stores information about applications, user accounts, and/or client computing devices that can be used to determine that a credential included in the authentication request is authentic. For the sake of this example, it will be assumed that identity provider 122 determines that the authorization request is authentic.

In response to determining authorization request 208 (or a credential included therein, a credential otherwise provided to identity provider 122 (e.g., in a prompt from application registration service 120), and/or the like) is authentic, identity provider 122 generates a registration artifact 212 and provides registration artifact 212 to application frontend 114. Registration artifact 212 comprises, for example and without limitation, an access token, an identifier token, a refresh token, an assertion token, and/or another type of artifact for attesting authentication of application frontend 114, user account 128, and/or computing device 102 by identity provider 122. In an embodiment, registration artifact 212 comprises a digital signature generated by identity provider 122. In an embodiment, identity provider 122 provides registration artifact 212 to application frontend in a redirect message that causes application frontend 114 to be redirected to application registration service 120.

In some situations, identity provider 122 determines the authorization request is not authentic. In this context, identity provider 122 does not generate a registration artifact. In accordance with an embodiment, subsequent to determining the authorization request is not authentic, identity provider 122 generates an error message and provides the error message to application frontend 114 and/or application registration service 120.

As shown in FIG. 2, application frontend 114 receives registration artifact 212 from identity provider 112. In accordance with an embodiment, application frontend 114 stores registration artifact 212 in memory (e.g., memory of computing device 102 of FIG. 1), in a cache of application frontend 114, or as a cookie of a web browser. In this manner, application frontend 114 is able to access registration artifact 212 for subsequent attestation of authorization by identity provider 122.

In embodiments, application registration service 120 requires application frontend 114 to present registration artifact 212 and a registration code in order to register application frontend 114. Application frontend 114 is configured to receive the registration code in various ways. For instance, in embodiments described herein, application frontend 114 or a user interacting with application frontend 114 is provided access to the registration code by an admin computing device 104. In some embodiments, identity provider 122 provides a registration prompt 214 to admin computing device 104 to cause admin computing device 104 to provide the registration code to application frontend 114. In an alternative implementation, application registration service 120 provides the registration prompt to admin computing device 104. Depending on the implementation, application registration service 120 provides the registration prompt responsive to registration request 202, in association with transmitting redirect message 206 to application frontend 114, subsequent to application frontend 114 providing registration artifact 212 and failing to present a registration code (or presenting an expired code). In accordance with an embodiment, registration prompt 214 is a message or notification directing an admin user to provide application frontend 114, user account 128, client computing device 102, or the associated user with the registration code. In an embodiment, registration prompt 214 causes an interface to be displayed in a user interface of admin computing device 104 (e.g., a user interface of admin application 138), the interface enabling the admin user to authorize or deny authorization (e.g., via interaction with admin application 138). However, it is not essential to have an admin user carry out this task as in some examples the authorizing or denying authorization is implemented automatically (e.g., by admin application 138) using rules, thresholds or other criteria.

Admin computing device 104 makes an authorization 216 (e.g., automatically or via user interaction with admin application 138). Depending on the implementation, authorization 216 authorizes application frontend 114, computing device 102, a user account associated with application frontend 114 or computing device 102, and/or a user associated with application frontend 114, computing device 102, or the user account to access application backend 126 and/or resource 112. In an embodiment, admin computing device 104 makes authorization 216 responsive to receiving registration prompt 214. Alternatively, admin computing device 104 makes authorization 216 separate from the providing of registration artifact 212 to application frontend 114. For instance, in an embodiment, admin computing device 104 makes authorization 216 prior to application frontend 114 requesting registration thereof.

As shown in FIG. 2, subsequent to making authorization 216, admin computing device 104 provides registration code 218 to application frontend 114. Alternatively, admin computing device 104 provides registration code 218 to computing device 102, another device associated with the user (e.g., a mobile device of the user and/or the like), an e-mail address associated with the user account, and/or the like. In an embodiment, admin application 138 executing on admin computing device 104 generates registration code 218. In embodiments, registration code 218 comprises a randomly generated alphanumeric code, a pseudo-randomly generated alphanumeric code, a code generated based on an identifier of application frontend 114, an identifier of user account 128, an identifier of admin computing device 104, an identifier of an account of the admin user, a code provided to admin computing device 104 by another admin computing device or a service provider, and/or another type of alphabetic code, numeric code, alphanumeric code, and/or the like. In another embodiment, registration code 218 is generated by application registration service 120 or identity provider 122 and included in registration prompt 214. In embodiments, admin computing device 104 provides application registration service 120 with registration code 218 and/or an encrypted version of registration code 218 for use in verifying application frontend 114 possesses registration code 218.

In some embodiments, admin computing device 104 causes admin server 136 of FIG. 1 to generate and/or otherwise provide registration code 218 to application frontend 114, computing device 102, another device associated with the user, an e-mail associated with user account 128, and/or the like. In this context, subsequent to making authorization 216, admin computing device 104 causes admin server 136 (e.g., by transmitting an instruction to admin server 136) to issue registration code 218 to application frontend 114 or client computing device 102. In an embodiment, admin server 136 utilizes code generator 140 to generate registration code 218. In an embodiment, admin server 136 provides registration code 218 or an encrypted version of registration code 218 to application registration service 120 for use in verifying application frontend 114 possesses registration code 218.

As shown in sequence diagram 200 the process continues with application frontend 114 issuing a key request 220 to application registration service 120. In an embodiment, key request 220 comprises registration artifact 212 and registration code 218. In an embodiment, application frontend 114 generates key request 220 subsequent to receiving registration code 218 and registration artifact 212. In an embodiment, a user interacts with a user interface of application frontend 114 to provide application frontend 114 with registration code 218 (e.g., subsequent to the user or the user account of the user receiving registration code 218 from admin computing device 104). For instance, in an embodiment, application registration service 120 causes an interface to be displayed in a user interface of application frontend 114 that enables a user to enter registration code 218. Alternatively, application registration service 120 obtains registration code 218 (and/or registration artifact 212) from a cache of application frontend 114, as a cookie, from memory of client computing device 102, and/or the like.

Subsequent to receiving key request 220, application registration service 120 makes a determination 222 that key request 220 is authentic. For example, in accordance with an embodiment, application registration service 120 determines if registration code 218 included in key request 220 matches a stored version of registration code 218 that application registration service 120 has access to (e.g., received from admin computing device 104 or admin server 136). In accordance with an embodiment, registration code 218 is provided to application registration service 120 as an encrypted registration code. In this context, an implementation of application registration service 120 verifies the received encrypted version of registration code 218 matches an expected encrypted version of the code (e.g., a stored encrypted version of the code). Alternatively, another implementation of application registration service 120 decrypts the encrypted version and determines if the decrypted version matches an expected (e.g., stored) registration code. For the sake of these examples, application registration service 120 is assumed to determine key request 220 is authentic.

Responsive to (or otherwise subsequent to or prior to) determining key request 220 (the artifact included therein or the registration code included therein) is authentic, application registration service 120 releases registration key 224 to application frontend 114. In accordance with an embodiment, application registration service 120 accesses a key vault to obtain registration key 224 and provides registration key 224 to application frontend 114. Alternatively, application registration service 120 generates registration key 224. For instance, in accordance with an embodiment, application registration service 120 generates registration key 224 utilizing a cryptographic algorithm. In an embodiment, the cryptographic algorithm is a random number generator algorithm, a pseudorandom number generator algorithm, a Rivest-Shamir-Adleman (RSA) algorithm, or another type of algorithm suitable for generation registration key 224. In an embodiment, the cryptographic algorithm generates registration key 224 with registration artifact 212, registration code 218, and/or an identifier (e.g., of a user account, of application frontend 114, of computing device 102, and/or the like) as input. In accordance with another embodiment, application registration service 120 causes another service or component (e.g., a key generator) to generate registration key 224 (e.g., using a cryptographic algorithm). In an embodiment where application registration service 120 generates registration key 224 as a private key of a key pair, application registration service 120 provides a public key of the key pair to ownership validator 124 of FIG. 1 (not shown in FIG. 2 for brevity).

In some situations, application registration service 120 determines key request 220 is not authentic. In this context, application registration service 120 does not release registration key 224 to application frontend 114. In accordance with an embodiment, subsequent to determining key request 220 is not authentic, application registration service 120 generates an error message and provides the error message to application frontend 114, admin computing device 104, and/or a user account associated with application frontend 114.

Subsequent to receiving registration key 224, application frontend 114 performs a storage operation 226 to store registration key 224 in key repository 116. In an embodiment, application frontend 114 encrypts registration key 224 prior to storing in key repository 116.

In embodiments, application registration service 120 and identity provider 122 operate in various ways to authenticate an application such as application frontend 114. For example, FIG. 3 shows a flowchart 300 of a process for authenticating an application for registration, in accordance with an example embodiment. Application registration service 120 operates according to flowchart 300, in an embodiment. Note that not all steps of flowchart 300 need be performed in all embodiments. Further structural and operational embodiments will be apparent to persons skilled in the relevant art(s) based on the following description of FIG. 3.

Flowchart 300 begins with step 302. In step 302, a registration request is received from an application frontend. For example, as described with respect to FIG. 2, application registration service 120 receives a registration request 202 from application frontend. In an embodiment, registration request 202 comprises an identifier of application frontend 114, an identifier of user account 128, and/or an identifier of client computing device 102.

In step 304, the identity provider is caused to generate a registration artifact indicating the user account is authenticated for registration. For instance, as described with respect to FIG. 2, application registration service 120 provides redirect message 206 to application frontend 114, causing application frontend to transmit authorization request 208 to identity provider 122, causing identity provider 122 to make determination 210 and generate registration artifact 212. Alternatively, application registration service 120 transmits a prompt to identity provider 122 (not shown in FIG. 2 for brevity). In an aspect the prompt causes identity provider 122 to issue a challenge to application frontend 114, causing application frontend 114 to provide a credential to identity provider 122. Alternatively, the prompt comprises the credential of application frontend 114 and/or user account 128. In either case, identity provider 122 is caused to make determination 210 and generate registration artifact 212 in response to the prompt. As described herein, registration artifact 212 indicates that client computing device 102, user account 128 or application frontend 114 is authenticated for registration.

In embodiments, a registration code is to be provided to application registration service 120 for registration of application frontend 114 or user account 128. In order to enable application frontend 114 to provide application registration service 120, either application frontend 114 or a user interacting with application frontend 114 is provided access to the registration code. Embodiments described herein operate in various ways to provide an application frontend or a user access to a registration code. For example, FIG. 4 shows a flowchart 400 of a process for providing a registration code, in accordance with an example embodiment. Application registration service 120 or identity provider 122 operate according to flowchart 400, in an embodiment. Note that flowchart 400 need not be performed in all embodiments. Further structural and operational embodiments will be apparent to persons skilled in the relevant art(s) based on the following description of FIG. 4.

Flowchart 400 comprises step 402. In step 402, an admin server is caused to provide the client computing device access to the registration code. For example, admin server 136 of FIG. 1 in an embodiment is caused to provide a registration code to client computing device 102. For instance, as described with respect to FIGS. 1 and 2, admin server 136 provides registration code 218 to application frontend 114. In an example, admin server 136 is caused to generate (e.g., utilizing code generator 140) and/or provide registration code 218 subsequent to receiving an instruction from admin computing device 104, e.g., subsequent to, responsive to, or otherwise in relation to admin computing device 104 making authorization 216. As also described with respect to FIG. 2, admin computing device 104 makes authorization 216 responsive to receiving a prompt (e.g., registration prompt 214 from application registration service 120 or identity provider 122, as described with respect to FIG. 2). In an alternative, admin server 136 provides the registration code to a user or a user account (e.g., user account 128) and either the user or the user account are enabled to input the registration code in application frontend 114 or an interface provided therein. In some embodiments, admin computing device 104 provides the registration code in lieu of admin server 136.

As described herein, an admin server or an admin computing device can be prompted to provide a registration code to a user account, a client computing device, an application frontend, and/or a user. Embodiments described herein are configured to prompt admin computing device or admin server to provide the registration code in various ways. FIG. 5 shows a flowchart 500 of a process for prompting an admin computing device, in accordance with an example embodiment. Application registration service 120 and/or identity provider operates according to flowchart 500, in an embodiment. Note that flowchart 500 need not be performed in all embodiments. In an embodiment, flowchart 500 is a further example of flowchart 400 of FIG. 4. Further structural and operational embodiments will be apparent to persons skilled in the relevant art(s) based on the following description of FIG. 5.

Flowchart 500 comprises step 502. In step 502, a prompt is caused to be displayed in a user interface of the admin computing device, the prompt comprising a request to authorize the client computing device, the application frontend, or a user account. For example, as described with respect to FIG. 2, identity provider 122 and/or application registration service 120 provides a registration prompt 214 to admin computing device 104. In this context, registration prompt 214 causes a prompt to be displayed in a user interface of admin computing device 104 (e.g., a user interface of admin application 138). The displayed prompt comprises a request to authorize client computing device 102, application frontend 114, and/or user account 128 to register with application registration service 120. In accordance with an embodiment, the displayed prompt includes a graphic icon that enables a user to interact therewith in order to grant or deny authorization of application frontend 114. In accordance with another embodiment the displayed prompt enables the admin user to determine a period of time registration code 218 is valid. After expiration of the period of time, registration code 218 is no longer usable (e.g., by application frontend 114) for (e.g., successfully) registering an application with application registration service 120. However, it is not essential to have an admin user determine the period of time registration code 218 is valid. For instance, in alternative implementations, admin computing device 104 or an application executing thereon automatically determines the period of time based on a predetermined value, a rule, a threshold, or other criteria.

As described herein, embodiments of application registration services enable an application frontend to be registered therewith. Such application registration services operate in various ways to register an application, in embodiments. For example, FIG. 6 shows a flowchart 600 of a process for registering an application, in accordance with an example embodiment. Application registration service 120 operates according to flowchart 600, in an embodiment. Note that not all steps of flowchart 600 need be performed in all embodiments. Further structural and operational embodiments will be apparent to persons skilled in the relevant art(s) based on the following description of FIG. 6.

Flowchart 600 begins with step 602. In step 602, a registration code is received from the application frontend, the registration code indicating the user account is an authorized user account of the application backend. For example, as described with respect to FIG. 6, application registration service 120 receives key request 220 comprising registration code 218. Registration code 218 indicates user account 128 and/or application frontend 114 is authorized for accessing application backend 126 by admin computing device 104 or an admin user associated therewith. In some embodiments, registration code 218 indicates user account 128 and/or application frontend 114 is authorized to access multiple (e.g., different) application backends.

In step 604, responsive to validating the registration code, a registration key is transmitted to the application frontend. For example, as described with respect to FIG. 2, application registration service 120 makes a determination 222 that registration code 218 included in key request 220 is valid (e.g., key request 220 is authentic) and releases registration key 224 to application frontend 114. In an embodiment where registration code 218 indicates user account 128 and/or application frontend 114 is authorized for accessing multiple application backends, application registration service 120 releases multiple registration keys (e.g., a corresponding registration key for each application backend, a corresponding registration key for each group of application backends, and/or the like). Alternatively, a single key (e.g., registration key 224) is configured to allow application frontend 114 access to multiple application backgrounds.

### IV. Example Application Authentication and Authorization Embodiments

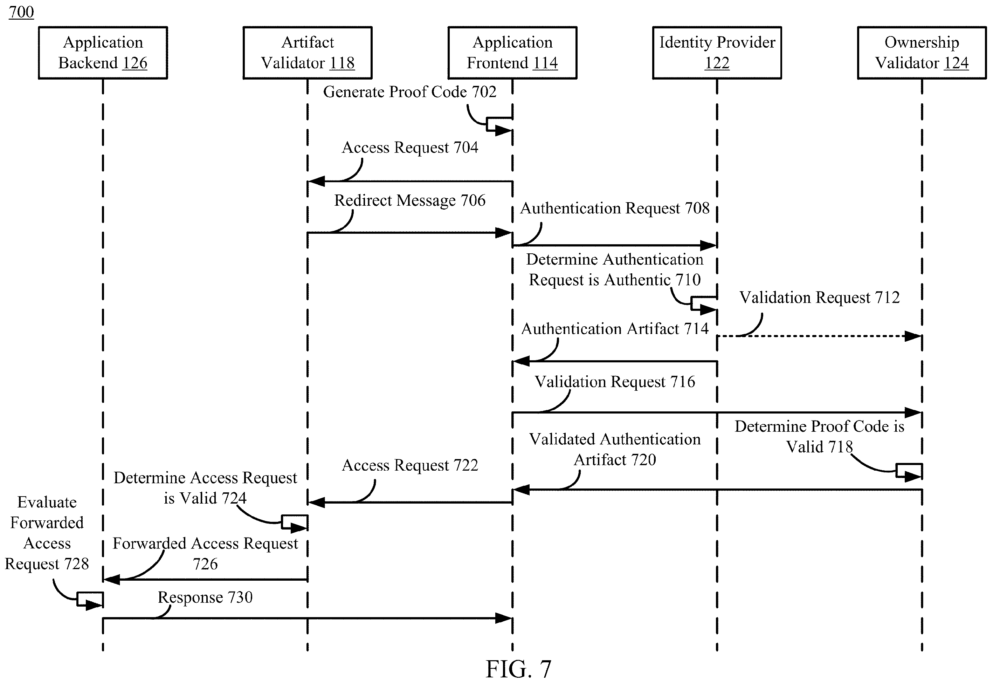

As described herein, embodiments of the present disclosure operate to authenticate an application and authorize the application's access to an application backend or resource. Embodiments operate to authenticate and authorize applications in various ways. For instance, with reference to the context of system 100 of FIG. 1, an exemplary process for authenticating an application and providing the application access to an application backend will now be described in reference to FIG. 7. FIG. 7 shows a sequence diagram 700 that illustrates a process for authenticating an application (e.g., application frontend 114) and providing the application access to an application backend (e.g., application backend 126), in accordance with an example embodiment. In an embodiment, system 100 operates in accordance with the steps of sequence diagram 700. Note that not all steps of sequence diagram 700 need be performed in all embodiments. Sequence diagram 700 is described as follows with respect to FIG. 1.

As shown in sequence diagram 700, the process begins with application frontend 114 generating a proof code 702. In embodiments, application frontend 114 generates proof code 702 based on registration key 224 provided by application registration service 120, as described with respect to sequence diagram 200 of FIG. 2. In an embodiment, application frontend 114 generates proof code 702 utilizing a proof generation algorithm that accepts registration key 224 as input. In accordance with an embodiment, proof code 702 cryptographically attests that application frontend 114 has access to registration key 224 without exposing registration key 224 to external systems and/or services. In some embodiments, application frontend 114 generates proof code 702 responsive to (or otherwise subsequent to) receiving registration key 224 as described with respect to sequence diagram 200 of FIG. 2. In an alternative embodiment, application frontend 114 generates proof code 702 in response to a request for registration key 224 or proof of ownership of registration key 224. For instance, as further described herein, in an embodiment, application frontend 114 generates proof code 702 in response to a challenge received from identity provider 122, ownership validator 124, and/or artifact validator 118.

Application frontend 114 provides an access request 704 to artifact validator 118. For example, application frontend 114 provides access request 704 to artifact validator 118. In an embodiment, access request 704 comprises a credential or identifier of application frontend 114 and/or user account 128, an indication of the resource (e.g., resource 112) or service (e.g., application backend 126) application frontend 114 is requesting access to.

Responsive to receiving access request 704, artifact validator 118 determines an artifact indicating application frontend 114 is a registered application and/or user account 128 is an authentic account is required to fulfill access request 704 (e.g., provide access to application backend 126 or a resource thereof (e.g., resource 112 of FIG. 1). For instance, in an embodiment, artifact validator 118 determines fulfilling access request 704 requires an artifact indicating application frontend 114 is registered with application registration service 120 and authenticated with identity provider 122. In an embodiment, artifact validator 118 determines a URL of identity provider 122 or authentication service 130 that artifact frontend 114 is to be redirected to. As shown in FIG. 7, artifact validator 118 provides a redirect message 706 comprising the determined URL to application frontend 114. Alternatively, artifact validator 118 provides a response (not shown in FIG. 7 for brevity) to application frontend 114 indicating proof of registration is required.

Responsive to receiving redirect message 706, application frontend 114 is redirected to identity provider 122. In this context, application frontend 114 provides an authentication request 708 to identity provider 122. Alternatively, e.g., in an embodiment where artifact validator 118 provides a response to application frontend 114, application frontend 114 determines if application frontend 114 has registered with application registration service 120 prior to transmitting authentication request 708. For instance, in an embodiment, application frontend 114 determines if it has access to registration key 224 or if registration key 224 has expired. If application frontend 114 does not have access to registration key 224 or registration key 224 has expired, application frontend transmits a registration request to application registration service 120 in a similar manner as described with respect to FIG. 2. If application frontend 114 does have access to registration key 224 (and the key has not expired), application frontend 114 transmits authentication request 708 to identity provider 122.

In an embodiment, authentication request 708 comprises a credential of application frontend 114 and/or user account 128. In some embodiments, authentication request 708 comprises proof code 702. In certain implementations, authentication request 708 comprises multiple communications. For example, application frontend 114 in an implementation initiates a first communication to identity provider 122 (e.g., responsive to redirect message 706). Responsive to receiving the first communication, identity provider 122 interacts with application frontend 114 to obtain the credential as part of a second communication therefrom, e.g., by causing a user interface to be presented in a user interface of application frontend 114 via which a user can submit the credential to identity provider 122, by obtaining a cookie that is stored in a cache of application frontend 114, by obtaining other information from client computing device 102, and/or the like. In another example, identity provider 122 issues a challenge to application frontend 114 to generate or otherwise provide proof code 702. In some examples, the challenge causes application frontend 114 to generate proof code 702 based on registration key 224 and one or more of an identifier of application frontend 114, an identifier of authentication service 130, an identifier of client computing device 102, an identifier or credential of user account 128, a time (e.g., hour, minute, second, day, month, year, and/or the like) in which the challenge was received by application frontend 114, a session identifier of a session between application frontend 114 and authentication service 130 (or a subservice thereof), and/or other information that uniquely associates the proof code with the challenge. In this manner, validity of proof code 702 is bound to both possession of registration key 224 by application frontend 114 and the challenge, thereby reducing the ability of a malicious entity to reuse application frontend 114's response to the challenge in an attempt to gain access to an authentication artifact.

Responsive to receiving authentication request 708, identity provider 122 evaluates certain information included in the request to make a determination 710 that authentication request 708, application frontend 114, and/or user account 128 are authentic. For instance, in accordance with an embodiment, identity provider 122 accesses a directory that stores information about applications, user accounts, and/or client computing devices that can be used to determine that a credential included in the authentication request is authentic. For the sake of this example, it is assumed that identity provider 122 determines that authentication request 708 (or the credential included therein) is authentic; however, in situations where identity provider 122 determines the request or credential are not authentic, it can generate an error message in similar manners as described elsewhere herein.

In response to determination 710, identity provider 122 generates an authentication artifact 714. Authentication artifact 714 indicates user account 128, authentication request 708, and/or application frontend 114 is authenticated. In accordance with an embodiment where authentication request 708 comprises proof code 702, authentication artifact 714 comprises proof code 702. In an embodiment, identity provider 122 utilizes a private signing key to digitally sign authentication artifact 714 in a manner that enables other services and/or components to utilize a corresponding private key to verify the signature.

Depending on the implementation, identity provider 122 provides authentication artifact 714 to application frontend 114 or to ownership validator 124. For instance, as optionally shown in FIG. 7, identity provider 122 transmits a validation request 712 to ownership validator 124 on behalf of application frontend 114. In this context, validation request 712 comprises authentication artifact 714 (which comprises proof code 702 in this example). In some cases, validation request 712 comprises an identifier or location of application frontend 114. Alternatively, as also shown in FIG. 7, identity provider 122 provides authentication artifact 714 to application frontend 114 as a response to authentication request 708. In an embodiment, identity provider 122 provides authentication artifact 714 to application frontend 114 in a redirect message that redirects application frontend 114 to ownership validator 124. In this context, identity provider 122 determines a URL of ownership validator 124 and includes the URL in the redirect message.

Responsive to receiving authentication artifact 714, application frontend 114 transmits a validation request 716 to ownership validator 124. Validation request 716 comprises proof code 702. In an embodiment, validation request 716 comprises authentication artifact 714 such that ownership validator 124 can verify application frontend 114 (or an associated user account) is authenticated prior to (or as part of) validating proof code 702. In certain implementations, validation request 716 comprises multiple communications. For example, application frontend 114 in an implementation initiates a first communication to ownership validator 124. Responsive to receiving the first communication, ownership validator 124 interacts with application frontend 114 to obtain proof code 702 (and/or authentication artifact 714) as part of a second communication therefrom, e.g., by causing a user interface to be presented in a user interface of application frontend 114 via which a user can agree to provide proof code 702 and/or authentication artifact 714 to ownership validator 124, by obtaining a cookie that is stored in a cache of application frontend 114, by obtaining other information from client computing device 102, and/or the like.

As described herein, authentication artifact 714 comprises proof code 702. Alternatively, application frontend 114 provides proof code 702 to ownership validator 124 along with authentication artifact 714 in validation request 716 or in separate communication to ownership validator 124 (e.g., in a multi-communication validation request implementation). For instance, suppose a non-limiting example of application frontend 114 provides validation request 716 comprising authentication artifact 714 to ownership validator 124. In this example, ownership validator 124 receives validation request 716, determines authentication artifact 714 is valid, and (if authentication artifact 714 is valid), issues a challenge to application 114. Depending on the implementation, the challenge causes application frontend 114 to provide a previously generated version of proof code 702 or generate a new proof code based at least on registration key 224. In some examples, the challenge causes application frontend 114 to generate a proof code based on registration key 224 and one or more of, one or more of an identifier of application frontend 114, an identifier of authentication service 130, an identifier of client computing device 102, an identifier or credential of user account 128, a time (e.g., hour, minute, second, day, month, year, and/or the like) in which the challenge was received by application frontend 114, a session identifier of a session between application frontend 114 and authentication service 130 (or a subservice thereof), and/or other information that uniquely associates the proof code with the challenge. In this manner, validity of proof code 702 is bound to both possession of registration key 224 by application frontend 114 and the challenge, thereby reducing the ability of a malicious entity to reuse application frontend 114's response to the challenge in an attempt to gain access to an a validated authentication artifact.

Responsive to receiving validation request 712 and/or validation request 716, ownership validator 124 makes a determination 718 that proof code 702 is valid. For instance, in accordance with an embodiment, ownership validator 124 utilizes a proof verification algorithm to determine proof code 702 is valid. In an embodiment, ownership validator 124 has access to an encrypted version of registration key 224 (e.g., provided thereto by application registration service 120) and utilizes an algorithm to determine based on proof code 702 and the encrypted version of registration key 224 that if (e.g., the unencrypted version of) registration key 224 were encrypted using a particular encryption algorithm, the result would match the encrypted version of registration key 224 accessible to ownership validator 124. In this context, ownership validator 124 is able to verify application frontend 114 has access to registration key 224 provided by application registration service 120 without exposing the unencrypted version of registration key 224 to ownership validator 124 or in communications between application frontend 114 and ownership validator 124. This improves security by reducing the exposure of sensitive information outside of key repository 116 of client computing device 102. In accordance with another embodiment, proof code 702 is a nonce, artifact, or certificate that application frontend 114 digitally signs with registration key 224. In this alternative, ownership validator 124 utilizes a public key corresponding to registration key 224 to verify the signature of proof code 702. For the sake of this example, it will be assumed that ownership validator 124 determines proof code 702 is valid; however, in situations where ownership validator 124 determines the code is invalid, it can generate an error message in similar manners as described elsewhere herein.

In response to determining proof code 702 is valid, ownership validator 124 generates a validated authentication artifact 720. Validated authentication artifact 720 comprises, for example and without limitation, an access token, an identifier token, a refresh token, an assertion token, and/or another type of artifact for attesting validity of application frontend 114's registration with application registration service 120. In an embodiment, ownership validator 124 generates validated authentication artifact 720 by utilizing a private signing key of ownership validator 124 to digitally sign authentication artifact 714, resulting in a signed authentication artifact (e.g., validated authentication artifact 720 in this example). In another embodiment, ownership validator 124 generates validated authentication artifact 720 based on authentication artifact 714 utilizing a token generator with authentication artifact 714 as input. In an embodiment, ownership validator 124 provides validated authentication artifact 720 in a redirect message to application frontend 114 that causes application frontend 114 to be redirected to artifact validator 118. In some embodiments, ownership validator 124 provides validated authentication artifact 720 to identity provider 122, causing identity provider 122 to provide validated authentication artifact 720 to application frontend 114.

Thus, examples of fulfilling authentication requests and validation requests have been described with respect to identity provider 122 and ownership validator 124. In an alternative embodiment, application frontend 114 (or an associated user account) is authenticated and proof code 702 is validated by the same service and/or component. In this context, identity provider 122 and ownership validator 124 are implemented as a single authentication service or a distributed authentication service. In this context, the authentication service is configured to operate in similar manners as identity provider 122 and ownership validator 124, as described with respect to the foregoing portions of FIG. 7, as well as elsewhere herein.

Referring again to sequence diagram 700 of FIG. 7, application frontend 114 receives validated authentication artifact 720 from ownership validator 124 (or identity provider 122 or an authentication service, e.g., authentication service 130). In accordance with an embodiment, application frontend 114 stores validated authentication artifact 720 in memory (e.g., memory of computing device 102, a cache of application frontend 114, and/or the like). As further shown in FIG. 7, application frontend 114 transmits an access request 722 to artifact validator 118. Access request 722 comprises validated authentication artifact 720 and indicates a request for access to application backend 126 and/or a resource thereof (e.g., resource 112 of FIG. 1). In accordance with an embodiment, access request 722 comprises multiple communications. For example, application frontend 114 in an implementation initiates a first communication to artifact validator 118. Responsive to receiving the first communication, artifact validator 118 interacts with application frontend 114 to obtain validated authentication artifact 720 as part of a second communication therefrom, e.g., by causing a user interface to be presented in a user interface of application frontend 114 via which a user can authorize submission of validated authentication artifact 720 to artifact validator 118, by obtaining a cookie that is stored in a cache of application frontend 114, by obtaining other information from client computing device 102, and/or the like.

Responsive to receiving access request 722, artifact validator 118 makes a determination 724 that access request 722 is valid. For instance, depending on the implementation, determination 724 comprises determining validated authentication artifact 720 is generated by identity provider 122 and validated by ownership validator 124, determining validated authentication artifact 720 is generated by ownership validator 124, and/or otherwise validating validated authentication artifact 720. For example, in an embodiment where validated authentication artifact 720 is a signed version of authentication artifact 714, artifact validator 118 verifies the signature utilizing a public key corresponding to the private key ownership validator 124 signed the artifact with. In accordance with an embodiment where authentication artifact 714 is signed with a digital signature of identity provider 122, artifact validator 118 verifies the signature using a corresponding public key. For the sake of this example, it will be assumed that artifact validator 118 determines validated authentication artifact 720 is valid (e.g., and access request 722 is valid); however, if artifact validator 118 determines the request or artifact are invalid, artifact validator 118 can issue an error message as described elsewhere herein.

In some embodiments, in addition to verifying identity provider 122 generated validated authentication artifact 720 and ownership validator 124 signed validated authentication artifact 720, artifact validator 118 validates the proof code included in validated authentication artifact 720 or a proof code included in access request 722. In this context, artifact validator 118 validates the proof code in a similar manner as described with respect to ownership validator 124 making determination 718. For example, suppose application frontend 114 provides proof code 702 to artifact validator 118 along with validated authentication artifact 720 in authentication request 722 or in separate communication to artifact validator 118 (e.g., in a multi-communication access request implementation). For instance, suppose a non-limiting example of application frontend 114 provides access request 722 comprising validated authentication artifact 720 to artifact validator 118. In this example, artifact validator 118 receives access request 722, determines validated authentication artifact 720 is valid, and (if validated authentication artifact 720 is valid), issues a challenge to application frontend 114. Depending on the implementation, the challenge causes application frontend 114 to provide a previously generated version of proof code 702 (e.g., the same proof code generated in response to a challenge received from identity provider 122 or ownership validator 124, the same proof code provided in authentication request 708 or validation request 716, or another previously generated proof code) or generate a new proof code based at least on registration key 224 (e.g., a different proof code than the proof code provided in authentication request 708 or validation request 716). In some examples, the challenge causes application frontend 114 to generate a proof code based on registration key 224 and one or more of, one or more of an identifier of application frontend 114, an identifier of artifact validator 118, an identifier of application backend 126, an identifier of client computing device 102, an identifier or credential of user account 128, a time (e.g., hour, minute, second, day, month, year, and/or the like) in which the challenge was received by application frontend 114, a session identifier of a session between application frontend 114 and artifact validator 118, and/or other information that uniquely associates the proof code with the challenge. In this manner, validity of proof code 702 is bound to both possession of registration key 224 by application frontend 114 and the challenge, thereby reducing the ability of a malicious entity to reuse application frontend 114's response to the challenge in an attempt to gain access to application backend 126 and/or resource 112.

In response to determining validated authentication artifact 720 is valid, artifact validator 118 provides forwarded access request 726 to application 126. In embodiments, forwarded access request 726 is a forwarded version of access request 722. Forwarded access request 726 indicates that application frontend 114 is authorized to access application backend 126. For instance, in an implementation, artifact validator 118 utilizes a private signing key to digitally sign access request 722, resulting in forwarded access request 726, and provides the digitally-signed request to application backend 126. In this context, the signature attests artifact validator 118 successfully determining application frontend 114 is authorized to access application backend 126. Alternatively, artifact validator 118 generates a validity token indicating that access request 722 is valid. In this context, the validity token is consumable by application backend 126 for determining to provide application frontend 114 access thereto.

Application backend 126 receives forwarded access request 726 and makes an evaluation 728 of forwarded access request 726. Depending on the implementation, application backend 126 evaluates a signature of artifact validator 118 included in forwarded access request 726, a validity token included in forwarded access request 726, and/or other information included in forwarded access request 726. For instance, in an embodiment where forwarded access request 726 is signed with a key of artifact validator 118, application backend 126 utilizes a public key to verify the signature. In this context, the public key corresponds to the private signing key utilized to digitally sign access request 722. In an embodiment, evaluation 728 comprises determining a service or resource that application frontend 114 is intending to access. For instance, suppose access request 722 is a request to access resource 112. In this context, application backend 126 determines to provide application frontend 114 with access to resource 112 as part of evaluation 728.

Subsequent to evaluating forwarded access request 728 and determining application frontend 114 is to have access to application backend 126 or a resource thereof, application backend 126 provides a response 730 to application frontend 114. In an embodiment, response 730 comprises a resource or a copy of a resource (e.g., resource 112 of FIG. 1) requested in access request 722. In accordance with another embodiment, response 730 causes application frontend 114 to have access to an interface of application backend 126 (e.g., in a window presented in a user interface of application frontend 114). For instance, in accordance with an embodiment, response 730 redirects application frontend 114 to a web page corresponding to application backend 126 (e.g., based on a URL of application backend 126).

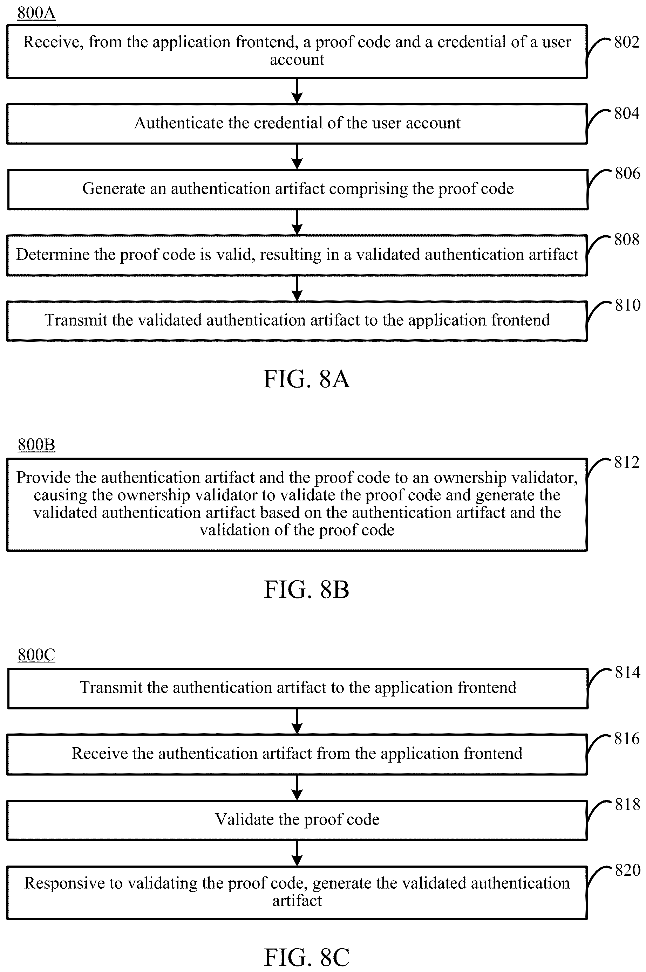

Application frontends and registration thereof are authenticated in various ways, in embodiments. For example, FIG. 8A shows a flowchart 800A of a process for authenticating an application, in accordance with an example embodiment. Authentication service 130 of FIG. 1 operates according to flowchart 800A, in an embodiment. Note that not all steps of flowchart 800A need be performed in all embodiments. Further structural and operational embodiments will be apparent to persons skilled in the relevant art(s) based on the following description of FIG. 8A.

Flowchart 800A begins with step 802. In step 802, a proof code and a credential of a user account are received from an application frontend. For example, as described with respect to FIG. 7, identity provider 122 receives an authentication request 708 comprising proof code 702 and a credential of user account 128 from application frontend 114. In an embodiment, proof code 702 and the credential are received in the same communication. Alternatively, proof code 702 and the credential are received in separate communications.

In step 804, the credential of the user account is authenticated. For example, as described with respect to FIG. 7, identity provider 122 authenticates a credential of user account 128 and/or application frontend 114 (e.g., by making determination 710). In an embodiment, identity provider 122 accesses a directory to determine the authenticity of the credential.

In step 806, an authentication artifact comprising the proof code is generated. For example, as described with respect to FIG. 7, identity provider 122 generates an authentication artifact 714 indicating the credential is authentic. In an embodiment, authentication artifact 714 comprises proof code 702. In an embodiment, identity provider 122 digitally signs authentication artifact 714.

In step 808, the proof code is determined to be valid, resulting in a validated authentication artifact. For example, as described with respect to FIG. 7, ownership validator 124 makes a determination 718 that proof code 702 is valid, resulting in validated authentication artifact 720. Depending on the implementation, ownership validator 124 makes determination 718 in response to a request from identity provider 122 (e.g., validation request 712) or a request from application frontend 114 (e.g., validation request 716). In embodiments, validated authentication artifact 720 indicates application frontend 114 has possession of proof code 702 (and therefore access to registration key 224).

In step 810, the validated authentication artifact is transmitted to the application frontend. For example, as described with respect to FIG. 7, ownership validator 124 transmits validated authentication artifact 720 to application frontend 114. In an embodiment, ownership validator 124 transmits validated authentication artifact 720 (e.g., directly) to application frontend 114 as a response to validation request 716. In an alternative embodiment, ownership validator 124 transmits validated authentication artifact 720 to identity provider 122 (e.g., as a response to validation request 712), causing identity provider 122 to provide validated authentication artifact 720 to application frontend 114 (e.g., as a response to authentication request 708).

As described with respect to flowchart 800A, in step 808, a proof code of an application frontend is determined to be valid. Systems described herein can determine validity of the proof code in various ways, in embodiments. For instance, FIG. 8B shows a flowchart 800B of a process for causing proof code validation, in accordance with an example embodiment. Identity provider 122 operates according to flowchart 800B, in an embodiment. Note that flowchart 800B need not be performed in all embodiments. Further structural and operational embodiments will be apparent to persons skilled in the relevant art(s) based on the following description of FIG. 8B.

Flowchart 800B comprises step 812, which is a further example of step 808 of flowchart 800A of FIG. 8A, in an embodiment.. In step 812, the authentication artifact and the proof code are provided to an ownership validator, causing the ownership validator to validate the proof code and generate the validated authentication artifact based on the authentication artifact and the validation code. For example, as described with respect to FIG. 7, identity provider 122, in an implementation, provides validation request 712 comprising authentication artifact 714 and proof code 702 to ownership validator 124. Validation request 712 causes ownership validator 124 to validate proof code 702 and generate validated authentication artifact 720. In embodiments, ownership validator 124 generates validated authentication artifact 720 based on authentication artifact 714 and proof code 702. By forwarding validation request 712 to ownership validator 124 on behalf of application frontend 114, identity provider 122 reduces the amount of compute resources expended by computing device 102 executing application frontend 114 and reduces network traffic to application frontend 114.

As described herein, systems can determine validity of a proof code in various ways. For example, FIG. 8C shows a flowchart 800C of a process for causing proof code validation, in accordance with another example embodiment. Identity provider 122 and ownership validator 124 of FIG. 1 operate according to flowchart 800C, in an embodiment. Note that not all steps of flowchart 800C need be performed in all embodiments. In accordance with an embodiment, flowchart 800C is an example of step 808 of flowchart 800A of FIG. 8A. Further structural and operational embodiments will be apparent to persons skilled in the relevant art(s) based on the following description of FIG. 8C.

Flowchart 800C begins with step 814. In step 814, the authentication artifact is transmitted to the application frontend. For example, as described with respect to FIG. 7, in an implementation, identity provider 122 transmits authentication artifact 714 to application frontend 114. Depending on the implementation, identity provider 122 provides the artifact as a response to authentication request 708 and/or as a redirect message that causes application frontend 114 to be redirected to ownership validator 124. By transmitting authentication artifact 714 to application frontend 114 for providing validation request 716 to ownership validator 124, embodiments can utilize (e.g., any type of) an identity provider that is suitable for authenticating application frontends, thereby increasing the flexibility of the system and compatibility.

In step 816, the authentication artifact is received from the application frontend. For example, as described with respect to FIG. 7, in an implementation, ownership validator 124 receives authentication artifact 714 from application frontend 114 in a validation request 716. In this context, authentication artifact 714 or validation request 716 comprises proof code 702.

In step 818, the proof code is validated. For example, as described with respect to FIG. 7, ownership validator 124 makes a determination 718 that proof code 702 is valid. As described herein, ownership validator 124 makes determination 718 utilizing a proof verification algorithm, utilizing a public key corresponding to registration key 224, and/or through another technique described herein for verifying a proof of ownership of registration key 224.

In step 820, responsive to validating the proof code, the validated authentication artifact is generated. For example, as described with respect to FIG. 7, ownership validator 124 generates validated authentication artifact 720 responsive to validating proof code 702. In an embodiment, ownership validator 124 generates validated authentication artifact 720 based on authentication artifact 714.

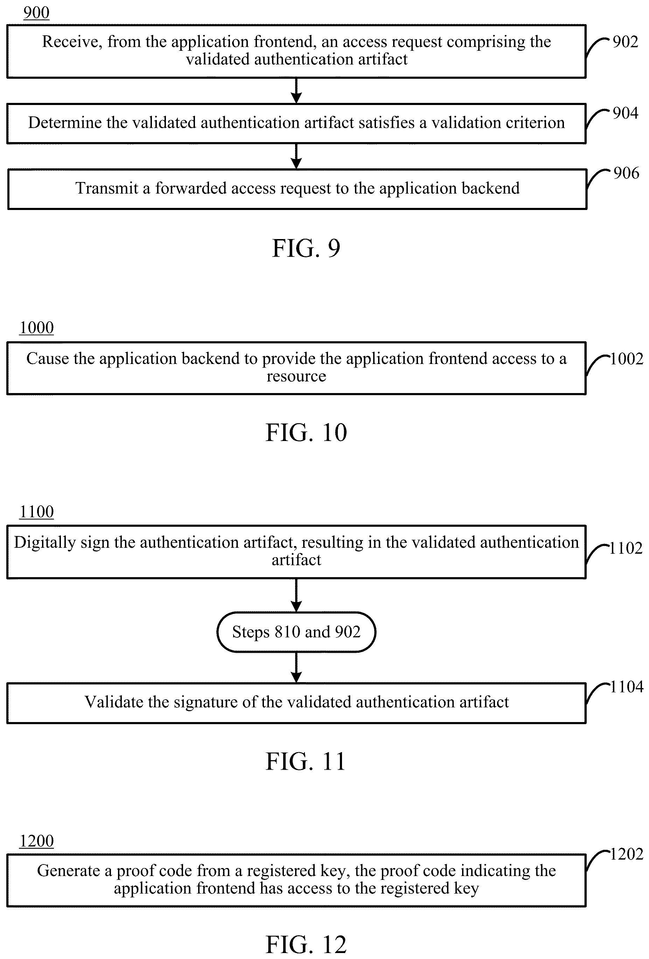

Embodiments of artifact validators described herein are configured to validate access requests to application backends and/or resources thereof. Such artifact validators can operate in various ways, in embodiments. For example, FIG. 9 shows a flowchart 900 of a process for validating an access request, in accordance with an example embodiment. Artifact validator 118 of FIG. 1 operates according to flowchart 900, in an embodiment. Note that not all steps of flowchart 900 need be performed in all embodiments. Further structural and operational embodiments will be apparent to persons skilled in the relevant art(s) based on the following description of FIG. 9.

Flowchart 900 begins with step 902. In step 902, an access request is received from the application frontend, the access request comprising the validated authentication artifact. For example, as described with respect to FIG. 7, artifact validator 118 receives access request 722 from application frontend 114. Access request 722 comprises validated authentication artifact 720. As described elsewhere herein, access request 722 can comprise a single or multiple communications.

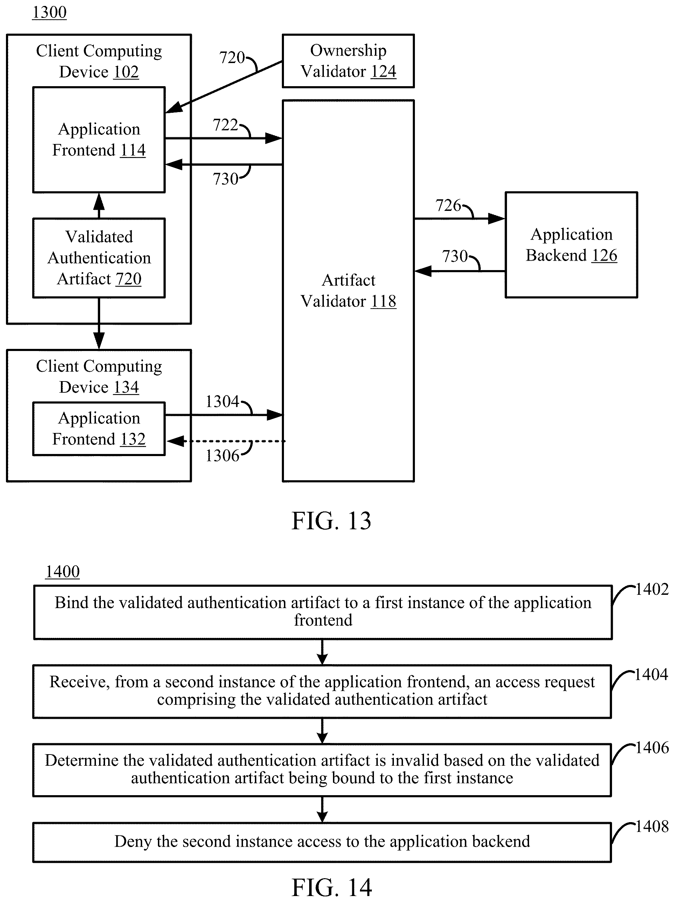

In step 904, the validated authentication artifact is determined to satisfy a validation criterion. For example, as described with respect to FIG. 7, artifact validator 118 makes a determination 724 to determine access request is valid. Examples of validation criterion include, but are not limited to, verification that a first signature of validated authentication artifact 720 was made utilizing a private signing key of ownership validator 124, verification that a second signature of validated authentication artifact 720 was made utilizing a private signing key of identity provider 122, verifying that validated authentication artifact 720 is generated (e.g., at least in part) by identity provider 122, verifying that validated authentication artifact 720 is consumable by application backend 126 and/or artifact validator 118, determining that validated authentication artifact 720 has not expired (e.g., that validated authentication artifact 720 is a fresh authentication artifact), determining that an identifier of the instance of application frontend 114 the access request was received from matches an identifier of an instance of the application that validated authentication artifact is bound to (e.g., as further described with respect to FIGS. 13 and 14, as well as elsewhere herein), validating a proof code included in validated authentication artifact 720 attests possession of a (e.g., specific) registration key, validating a proof code generated in response to a challenge issued by artifact validator 118 satisfies the challenge, and/or other criterion artifact validator 118 is configured to evaluate to determine validity of access request 722 or an artifact included therein.

In step 906, a forwarded access request is transmitted to the application backend. For example, as described with respect to FIG. 7, artifact validator 118 transmits forwarded access request 726 to application backend 126. In an example, forwarded access request 726 is a forwarded version of access request 722. In some implementations, forwarded access request 726 comprises a validity token generated by artifact validator 118 or a signature of artifact validator 118.

In embodiments, artifact validator 118 provides application frontend 114 access to application backend 126 or resources thereof in response to forwarded access request 726. Artifact validator 118 provides access in various ways, in embodiments. For example, FIG. 10 shows a flowchart 1000 of a process for providing an application access to an application backend, in accordance with an example embodiment. Artifact validator 118 of FIG. 1 operates according to flowchart 1000, in an embodiment. Note that flowchart 900 need not be performed in all embodiments. Further structural and operational embodiments will be apparent to persons skilled in the relevant art(s) based on the following description of FIG. 10.

Flowchart 1000 comprises step 1002. In step 1002, the application backend is caused to provide the application frontend access to a resource. For example, as described with respect to FIG. 7, in an embodiment, artifact validator 118 causes application backend 126 to provide application frontend 114 access to resource 112. In this context, application backend 126 receives forwarded access request 726, evaluates the forwarded request, and provides response 730 comprising resource 112 (or a copy of resource 112) to application frontend 114.

Artifact validator 118 is configured to validate access requests in various ways. For instance, in an implementation, artifact validator 118 validates an access request based on a signature of ownership validator 124. Artifact validator 118 can operate in various ways to validate an access request based on a signature of ownership validator 124. FIG. 11 shows a flowchart 1100 of a process for authenticating an application and validating an access request, in accordance with an example embodiment. Ownership validator 124 and artifact validator 118 of FIG. 1 operate according to flowchart 1100, in an embodiment. Note that not all steps of flowchart 1100 need be performed in all embodiments. Further structural and operational embodiments will be apparent to persons skilled in the relevant art(s) based on the following description of FIG. 11.

Flowchart 1100 begins with step 1102, which is a further example of step 808 of flowchart 800A, step 812 of flowchart 800B, and/or step 820 of flowchart 800C, as respectively described with respect to FIGS. 8A-8C. In step 1102, the authentication artifact is digitally signed, resulting in the validated authentication artifact. For example, in a further example described with respect to FIG. 7, ownership validator 124 generates validated authentication artifact 720 by utilizing a private signing key to digitally sign authentication artifact 714, resulting in validated authentication artifact 720 (i.e., as a signed version of authentication artifact 714).

As shown in FIG. 11, flow continues to steps 810 and 902, as respectively described with respect to FIGS. 8A and 9. For instance, as described with respect to FIG. 7, ownership validator 124 provides (e.g., directly or indirectly) the signed artifact to application frontend 114 and application frontend 114 provides access request 722 comprising the signed artifact to artifact validator 118.

Flowchart 1100 continues with step 1104, which is a further embodiment of step 904, as described with respect to flowchart 900 of FIG. 9. In step 1104, the signature of the validated authentication artifact is validated. For example, in one of the example embodiments described with respect to FIG. 7, artifact 118 validates the signature of validated authentication artifact 720 as part of determination 724. In accordance with an embodiment, artifact validator 118 utilizes a public key corresponding to the private signing key of ownership validator 124 to validate the signature.

As described herein, embodiments of ownership validator 124 verify application frontend 114 has access to a registration key (e.g., registration key 224). For instance, in some embodiments, ownership validator 124 verifies application frontend 114's access based on a proof code provided by application frontend 114. Application frontend 114 is configured to generate the proof code in various ways, in embodiments. For example, FIG. 12 shows a flowchart 1200 of a process for generating a proof code, in accordance with an example embodiment. Application frontend 114 of FIG. 1 operates according to flowchart 1200, in an embodiment. Note that flowchart 1200 need not be performed in all embodiments. Further structural and operational embodiments will be apparent to persons skilled in the relevant art(s) based on the following description of FIG. 12.

Flowchart 1200 comprises step 1202. In step 1202, a proof code is generated from a registration key, the proof code indicating the application frontend has access to the registration key. For instance, as described with respect to FIG. 7, application frontend 114 generates proof code 702, proof code 702 indicating application frontend 114 has access to registration key 224. Depending on the implementation, application frontend 114 generates proof code 702 utilizing a proof generation algorithm with registration key 224 or utilizing another technique to generate a proof of possession of registration key 224. In an implementation, application frontend generates proof code 702 responsive to receiving registration key 224. In accordance with another embodiment, application frontend 114 generates proof code 702 subsequent to receiving a redirect message from artifact validator 118 (e.g., redirect message 706) or receiving an authentication artifact from identity provider 122 (e.g., authentication artifact 714). In an embodiment, application frontend 114 generates proof code 702 based on a session identifier or nonce that uniquely identifies a session between application frontend 114 and an authentication service (e.g., authentication service 130). In this context, ownership validator 124 is able to ensure proof code 702 corresponds to the session in which a validation request is received. This reduces potential replay attacks where a malicious entity obtains access to a proof generated in a previous session.

### V. Example Artifact Binding and Validity Determination Embodiments

Several example embodiments described herein provide techniques for registering application frontends and providing access to resources based on validity of the registration. In embodiments, an application frontend's registration is utilized to bind an authentication artifact to a particular instance of the application frontend. In this manner, (e.g., only) the particular instance is able to utilize the bound authentication artifact to access an application backend or a resource. By binding authentication artifacts to an instance in this manner, embodiments described herein further increase security, as a different instance of an application (e.g., a different instance of the same application) is unable to access the application backend or resource using the artifact that was bound to the first instance. Embodiments described herein are configurable in various ways to determine whether or not a particular instance of an application frontend is to be provided access to an application backend or a resource thereof. For instance, FIG. 13 shows a block diagram of a system 1300 for determining whether or not an access request is valid, in accordance with an example embodiment. As shown in FIG. 13, system 1300 comprises client computing device 102, artifact validator 118, ownership validator 124, application backend 126, and client computing device 134, as described with respect to FIG. 1. As also shown in FIG. 13, client computing device 102 comprises application frontend 114, as described with respect to FIG. 1, as well as validated authentication artifact 720 as described with respect to FIG. 7, and client computing device 134 comprises application frontend 132, as described with respect to FIG. 1. As described with respect to FIG. 1, in an embodiment, application frontend 114 is a first instance of an application frontend (e.g., **Application A**) and application frontend 132 is a second instance of the (e.g., same) application frontend (e.g., **Application A**). For instance, in an embodiment, application frontend 132 is a version of **Application A** that a malicious entity associated with client computing device 134 is utilizing in an attempt to impersonate the user of client computing device 102. For instance, suppose a malicious entity obtained access to validated authentication artifact 720 (e.g., by intercepting communication to or from client computing device 102 or otherwise). In this context, the malicious entity can attempt to utilize application frontend 132 and the stolen artifact in an attempt to access application backend 126.

In embodiments, system 1300 operates to bind validated authentication artifact 720 to a particular instance of a frontend application. To better understand the operation of system 1300, FIG. 13 is described with respect to FIG. 14. FIG. 14 shows a flowchart 1400 of a process for determining an access request is invalid, in accordance with an example embodiment. Ownership validator 124 and artifact validator 118 of FIG. 13 operate according to flowchart 1400, in an embodiment. Note that not all steps of flowchart 1400 need be performed in all embodiments. Further structural and operational embodiments will be apparent to persons skilled in the relevant art(s) based on the following descriptions of FIGS. 13 and 14.

Flowchart 1400 begins with step 1402. In an embodiment, step 1402 is a further example of step 808 of flowchart 800A of FIG. 8A, step 812 of flowchart 800B of FIG. 8B, step 820 of flowchart 800C of FIG. 8C, and/or step 1102 of flowchart 1100 of FIG. 11. In step 1402, the validated authentication artifact is bound to a first instance of the application frontend. For instance, in accordance with an embodiment, ownership validator 124 binds validated authentication artifact 720 to application frontend 114. For example, in some implementations, ownership validator 124 binds validated authentication artifact 720 to a unique identifier of application frontend 114, a credential of application frontend 114, and/or a nonce shared between application frontend 114 and ownership validator 124.

In accordance with an embodiment, ownership validator 124 generates a cryptographic key that uniquely binds validated authentication artifact to application frontend 114. For instance, in an embodiment, ownership validator 124 generates a cryptographic key pair based on an identifier of application frontend 114, a credential of application frontend 114, or the nonce shared between application frontend 114 and ownership validator 124. The cryptographic key pair comprises a private key and a public key. Ownership validator 124 provides the public key to artifact validator 118 and utilizes the private key (which is kept secret (e.g., only accessible to ownership validator 124)) to digitally sign validated authentication artifact 720. In this context, the signature binds validated authentication artifact 720 to application frontend 114 and other services or components (e.g., artifact validator 118) are able to verify validated authentication artifact 720 is bound to application frontend 114 utilizing a cryptographic algorithm that accepts the public key, the signed validated authentication artifact 720, and the information utilized to generate the cryptographic key pair (e.g., the identifier of application frontend 114, the credential of application frontend 114, or the nonce) as input. Alternatively, ownership validator 124 generates a symmetric cryptographic key based on the identifier of application frontend 114, the credential of application frontend 114, or the nonce shared between application frontend 114 and ownership validator 124. Ownership validator 124 utilizes the key to sign validated authentication artifact 720, binding validated authentication artifact 720 to application frontend 114. In this alternative, other services or components (e.g., artifact validator 118) generate a symmetric cryptographic key based on information provided thereto in an attempt to verify the signature. If the information was the same (e.g., application frontend 114 provides the same identifier, credential, or nonce that was used to generate the symmetric key), the generated key is able to verify the signature.

In accordance with an embodiment, ownership validator 124 binds validated authentication artifact 720 to application frontend 114 based on a secret. In this context, validated authentication artifact 720 or a signature thereof, is generated based on the secret and an identifier or nonce that uniquely identifies application frontend 114 and/or the session between ownership validator 124 and application frontend 114 (and, optionally, authentication artifact 714). In this context, artifact validator 118 utilizes an algorithm to determine the application frontend requesting access to application backend is bound to the artifact the application frontend is providing. Depending on the implementation, artifact validator 118 has access to the secret or an encrypted version of the secret for verifying whether or not the artifact is bound to the particular instance of the application backend.

In an embodiment, ownership validator 124 binds validated authentication artifact 720 by including encrypted information in validated authentication artifact 720 accessible to artifact validator 118. For instance, in an embodiment, ownership validator 124 utilizes a key to encrypt an identifier of application frontend 114 or a nonce representative of the session between application frontend 114 and ownership validator 124. In this context, application frontend 114 is unable to decrypt the encrypted identifier or nonce. Artifact validator 118 has access to a key configured to decrypt the encrypted identifier or nonce. In this context, artifact validator 118 utilizes the key to decrypt the encrypted identifier or nonce and determines if the decrypted object matches an identifier of the requesting instance of the application frontend or nonce provided by the requesting instance.

As shown in FIG. 13, artifact validator 118 provides application frontend 114 access to application backend 126 (or a resource thereof) based on validated authentication artifact 720 being bound thereto. For instance, application frontend 114 receives validated authentication artifact 720 from ownership validator 124. Optionally, application frontend 114 stores validated authentication artifact 720 in memory of client computing device 102. As described with respect to FIG. 7, application frontend 114 provides access request 722 comprising authentication artifact 720 to artifact validator 118 and causes artifact validator 118 to determine if application frontend 114 is to be provided access to application backend 126 or a resource thereof based on validated authentication artifact 720. For instance, artifact validator 118 determines validated authentication artifact 720 is bound to application frontend 114. If so, artifact validator 118 provides forwarded authentication request 726 to application backend 126, causing application backend 126 to provide access to it or a resource thereof to application frontend 114 via response 730. As shown in FIG. 13, in some embodiments, response 730 is provided from application backend 126 to application frontend 114 via artifact validator 118 (e.g., where artifact validator 118 is implemented in a proxy service communicatively coupled between application frontend 114 and application backend 126). Alternatively, application backend 126 provides response 730 (e.g., directly) to application frontend 114.

As described herein, artifact validator 118 is configured to prevent access to application backend 126 or a resource thereof if a requesting instance of an application backend is different from the instance the validated authentication artifact is bound to. For instance, with continued reference to FIGS. 13 and 14, in step 1404, an access request comprising the validated authentication artifact is received from a second instance of the application frontend. For example, suppose artifact validator 118 of FIG. 13 receives an access request 1304 comprising validated authentication artifact 720 from application frontend 132 (which is a second instance of **Application A** executing on client computing device 134). As described herein, application frontend 132 is a different instance of an application frontend from application frontend 114. In the example described herein, validated authentication artifact 720 is not bound to application frontend 132. In examples, application frontend 132 has access to validated authentication artifact 720 through memory of client computing device 102 or recovered memory from application frontend 114. For instance, in a non-limiting example, application frontend 132 is an application utilized by a malicious entity in an attempt to gain access to application backend 126 or a resource thereof utilizing validated authentication artifact 720. In FIG. 13 application frontend 132 is shown executing on client computing device 134 (e.g., where the malicious entity is remotely located from client computing device 102). Alternatively, application frontend 132 is executing on client computing device 102 (e.g., if the malicious entity gained possession of client computing device 102 or is remotely accessing client computing device 102). In this alternative, application frontend 132 is a rebooted, restarted, or otherwise different instance of application frontend 114.

In step 1406, the validated authentication artifact is determined to be invalid based on the validated authentication artifact being bound to the first instance. For instance, artifact validator 118 of FIG. 13 determines validated authentication artifact 720 is invalid based on validated authentication artifact being bound to application frontend 114 (and not application frontend 132). Depending on the implementation, artifact validator 118 determines validated authentication artifact is invalid based on an identifier of application frontend 132, (e.g., an encrypted version of) a secret possessed by ownership validator 124, a signature of ownership validator 124, and/or an identifier of application frontend 114. For instance, artifact validator 118 in an implementation determines if an encrypted identifier or nonce included in validated authentication artifact 720 matches an identifier or nonce provided by application frontend 132. In another implementation, artifact validator 118 determines if an encrypted secret included in validated authentication artifact 720 matches a secret accessible to artifact validator 118. In another implementation, artifact validator 118 attempts to validate a signature of validated authentication artifact 720 utilizing a key corresponding to a private key utilized by ownership validator 124. In an embodiment, artifact validator 118 generates the key based on information provided by application frontend 132 (e.g., an identifier or nonce provided thereby) and/or a secret accessible to artifact validator 118. In any of the situations described, artifact validator 118 determines validated authentication artifact 720 is an invalid token for authorizing application frontend 132 access to application backend 126 or a resource thereof based on validated authentication artifact 720 being bound to application frontend 114 (e.g., and not application frontend 132).

In step 1408, the second instance is denied access to the application backend. For example, artifact validator 118 denies application frontend 132 access to application backend 126 (e.g., based on the determination made in step 1406). In accordance with an embodiment, and as optionally shown in FIG. 13, artifact validator 118 provides error message 1306 indicating access to application backend 126 is denied. Depending on the implementation, error message 1306 indicates application registration is required, validated authentication artifact 720 is invalid, access to application backend 126 has failed, credentials have expired, and/or access to application backend 126 is otherwise denied. In accordance with an embodiment, error message 1306 redirects application frontend 132 to application registration service 120. In accordance with another (e.g., alternative or additional) embodiment, artifact validator 118 transmits a (e.g., separate) error message to admin computing device 104 indicating an attempt to access application backend 126 by application frontend 132 was made and access was denied. For instance, this error message can indicate a potential breach in security of client computing device 102 or user account 128.

Thus, example embodiments have been described with respect to FIGS. 13 and 14 regarding validating an authentication artifact and providing or denying access to an application backend based on an application frontend the authentication artifact is bound to. In some embodiments, authentication artifact is bound to a device (e.g., instead of or in addition to the instance of the application frontend). For instance, in an embodiment, authentication service 130 or ownership validator 124 operate in a similar manner as described with respect to step 1402 of flowchart 1400 to bind validated authentication artifact 720 to client computing device 120 (and, optionally, application frontend 114). Ownership validator 124 or authentication service 130 binds validated authentication artifact 720 to client computing device 102 based on an identifier of client computing device 102, an operating system of client computing device 102, hardware of client computing device 102 (e.g., based on identifier(s) of hardware or components thereof), operating conditions of client computing device 102 (e.g., temperature, computer utilization, and/or the like), and/or any other information suitable for identifying client computing device 102. In this context, artifact validator 118 (e.g., only) determines an access request is valid if the request is received from the device valid authentication artifact 720 is bound to.

### VI. Example Computer System Implementation

Embodiments of application authentication based on registration of the application described herein are implemented in hardware, or hardware combined with one or both of software and/or firmware. For example resource 112, application frontend 114, artifact validator 118, application registration service 120, identity provider 122, ownership validator 124, application backend 126, authentication service 130, application frontend 132, admin application 138, code generator 140, and/or the components described therein, the steps of flowcharts 300, 400, 500, 600, 800A, 800B, 800C, 900, 1000, 1100, and/or 1200, and/or the processes of sequence diagrams 200 and/or 700, are each implemented as computer program code/instructions configured to be executed in one or more processors and stored in a computer readable storage medium. Alternatively, client computing device 102, admin computing device 104, server 106, server 108, server 110, resource 112, key repository 116, artifact validator 118, identity provider 122, ownership validator 124, admin server 136, admin application 138, code generator 140, and/or the components described therein, the steps of flowcharts 300, 400, 500, 600, 800A, 800B, 800C, 900, 1000, 1100, 1200, and/or 1400, and/or the processes of sequence diagrams 200 and/or 700, are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

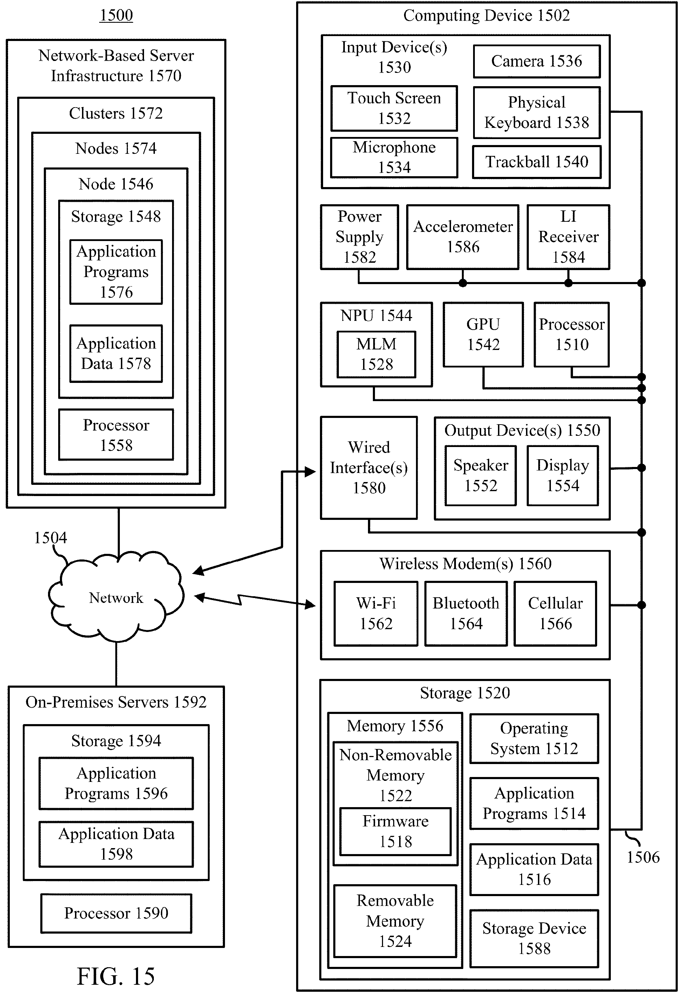

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 15. FIG. 15 shows a block diagram of an exemplary computing environment 1500 that includes a computing device 1502. Computing device 1502 is an example of client computing device 102, admin computing device 104, server 106, server 108, server 110, resource 112, and/or admin server 136, which each include one or more of the components of computing device 1502. In some embodiments, computing device 1502 is communicatively coupled with devices (not shown in FIG. 15) external to computing environment 1500 via network 1504. Network 1504 comprises one or more networks such as local area networks (LANs), wide area networks (WANs), enterprise networks, the Internet, etc. In examples, network 1504 includes one or more wired and/or wireless portions. In some examples, network 1504 additionally or alternatively includes a cellular network for cellular communications. Computing device 1502 is described in detail as follows.

Computing device 1502 can be any of a variety of types of computing devices. Examples of computing device 1502 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 1502 is a stationary computing device such as a desktop computer, a personal computer (PC), a stationary server device, a minicomputer, a mainframe, a supercomputer, etc.

As shown in FIG. 15, computing device 1502 includes a variety of hardware and software components, including a processor 1510, a storage 1520, a graphics processing unit (GPU) 1542, a neural processing unit (NPU) 1544, one or more input devices 1530, one or more output devices 1550, one or more wireless modems 1560, one or more wired interfaces 1580, a power supply 1582, a location information (LI) receiver 1584, and an accelerometer 1586. Storage 1520 includes memory 1556, which includes non-removable memory 1522 and removable memory 1524, and a storage device 1588. Storage 1520 also stores an operating system 1512, application programs 1514, and application data 1516. Wireless modem(s) 1560 include a Wi-Fi modem 1562, a Bluetooth modem 1564, and a cellular modem 1566. Output device(s) 1550 includes a speaker 1552 and a display 1554. Input device(s) 1530 includes a touch screen 1532, a microphone 1534, a camera 1536, a physical keyboard 1538, and a trackball 1540. Not all components of computing device 1502 shown in FIG. 15 are present in all embodiments, additional components not shown may be present, and in a particular embodiment any combination of the components are present. In examples, components of computing device 1502 are mounted to a circuit card (e.g., a motherboard) of computing device 1502, integrated in a housing of computing device 1502, or otherwise included in computing device 1502. The components of computing device 1502 are described as follows.

In embodiments, a single processor 1510 (e.g., central processing unit (CPU), microcontroller, a microprocessor, signal processor, ASIC (application specific integrated circuit), and/or other physical hardware processor circuit) or multiple processors 1510 are present in computing device 1502 for performing such tasks as program execution, signal coding, data processing, input/output processing, power control, and/or other functions. In examples, processor 1510 is a single-core or multi-core processor, and each processor core is single-threaded or multithreaded (to provide multiple threads of execution concurrently). Processor 1510 is configured to execute program code stored in a computer readable medium, such as program code of operating system 1512 and application programs 1514 stored in storage 1520. The program code is structured to cause processor 1510 to perform operations, including the processes/methods disclosed herein. Operating system 1512 controls the allocation and usage of the components of computing device 1502 and provides support for one or more application programs 1514 (also referred to as "applications" or "apps"). In examples, application programs 1514 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 1510 includes one or more general processors (e.g., CPUs) configured with or coupled to one or more hardware accelerators, such as one or more NPUs 1544 and/or one or more GPUs 1542.

Any component in computing device 1502 can communicate with any other component according to function, although not all connections are shown for ease of illustration. For instance, as shown in FIG. 15, bus 1506 is a multiple signal line communication medium (e.g., conductive traces in silicon, metal traces along a motherboard, wires, etc.) present to communicatively couple processor 1510 to various other components of computing device 1502, although in other embodiments, an alternative bus, further buses, and/or one or more individual signal lines is/are present to communicatively couple components. Bus 1506 represents one or more of any of several types of bus structures, including a memory bus or memory controller, a peripheral bus, an accelerated graphics port, and a processor or local bus using any of a variety of bus architectures.

Storage 1520 is physical storage that includes one or both of memory 1556 and storage device 1588, which store operating system 1512, application programs 1514, and application data 1516 according to any distribution. Non-removable memory 1522 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 1522 includes main memory and is separate from or fabricated in a same integrated circuit as processor 1510. As shown in FIG. 15, non-removable memory 1522 stores firmware 1518 that is present to provide low-level control of hardware. Examples of firmware 1518 include BIOS (Basic Input/Output System, such as on personal computers) and boot firmware (e.g., on smart phones). In examples, removable memory 1524 is inserted into a receptacle of or is otherwise coupled to computing device 1502 and can be removed by a user from computing device 1502. Removable memory 1524 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more storage device 1588 are present that are internal and/or external to a housing of computing device 1502 and are or are not removable. Examples of storage device 1588 include a hard disk drive, an SSD, a thumb drive (e.g., a USB (Universal Serial Bus) flash drive), or other physical storage device.

One or more programs are stored in storage 1520. Such programs include operating system 1512, one or more application programs 1514, and other program modules and program data. Examples of such application programs include computer program logic (e.g., computer program code/instructions) for implementing resource 112, application frontend 114, artifact validator 118, application registration service 120, identity provider 122, ownership validator 124, application backend 126, authentication service 130, application frontend 132, admin application 138, code generator 140, and/or the components described therein, the steps of flowcharts 300, 400, 500, 600, 800A, 800B, 800C, 900, 1000, 1100, 1200, and/or 1400, and/or the processes of sequence diagrams 200 and/or 700.

Storage 1520 also stores data used and/or generated by operating system 1512 and application programs 1514 as application data 1516. Examples of application data 1516 include web pages, text, images, tables, sound files, video data, and other data. In examples, application data 1516 is sent to and/or received from one or more network servers or other devices via one or more wired or wireless networks. Storage 1520 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 1502 through one or more input devices 1530 and receives information from computing device 1502 through one or more output devices 1550. Input device(s) 1530 includes one or more touch screen 1532, microphone 1534, camera 1536, physical keyboard 1538 and/or trackball 1540 and output device(s) 1550 includes one or more of speaker 1552 and display 1554. Each input device(s) 1530 and output device(s) 1550 are integral to computing device 1502 (e.g., built into a housing of computing device 1502) or are external to computing device 1502 (e.g., communicatively coupled wired or wirelessly to computing device 1502 via wired interface(s) 1580 and/or wireless modem(s) 1560). Further input devices 1530 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 1554 displays information, as well as operating as touch screen 1532 by receiving user commands and/or other information (e.g., by touch, finger gestures, virtual keyboard, etc.) as a user interface. Any number of each type of input device(s) 1530 and output device(s) 1550 are present, including multiple microphones 1534, multiple cameras 1536, multiple speakers 1552, and/or multiple displays 1554.

In embodiments where GPU 1542 is present, GPU 1542 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 1542 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 1544 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 1528. In an example, NPU 1544 is configured for a data-driven parallel computing and is highly efficient at processing massive multimedia data such as videos and images and processing data for neural networks. NPU 1544 is configured for efficient handling of AI-related tasks, such as speech recognition, background blurring in video calls, photo or video editing processes like object detection, etc.

In embodiments disclosed herein that implement ML models, NPU 1544 can be utilized to execute such ML models, of which MLM 1528 is an example. For instance, where applicable, MLM 1528 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 1544 is used to train MLM 1528. To train MLM 1528, training data includes input features (attributes) and their corresponding output labels/target values (e.g., for supervised learning) is collected. A training algorithm is a computational procedure that is used so that MLM 1528 learns from the training data. Parameters/weights are internal settings of MLM 1528 that are adjusted during training by the training algorithm to reduce a difference between predictions by MLM 1528 and actual outcomes (e.g., output labels). In some examples, MLM 1528 is set with initial values for the parameters/weights. A loss function measures a dissimilarity between predictions by MLM 1528 and the target values, and the parameters/weights of MLM 1528 are adjusted to minimize the loss function. The parameters/weights are iteratively adjusted by an optimization technique, such as gradient descent. In this manner, MLM 1528 is generated through training by NPU 1544 to be used to generate inferences based on received input feature sets for particular applications. MLM 1528 is generated as a computer program or other type of algorithm configured to generate an output (e.g., a classification, a prediction/inference) based on received input features, and is stored in the form of a file or other data structure.

In examples, such training of MLM 1528 by NPU 1544 is supervised or unsupervised. According to supervised learning, input objects (e.g., a vector of predictor variables) and a desired output value (e.g., a human-labeled supervisory signal) train MLM 1528. The training data is processed, building a function that maps new data on expected output values. Example algorithms usable by NPU 1544 to perform supervised training of MLM 1528 in some implementations include support-vector machines, linear regression, logistic regression, Naive Bayes, linear discriminant analysis, decision trees, K-nearest neighbor algorithm, neural networks, and similarity learning.

In an example of supervised learning where MLM 1528 is an LLM, MLM 1528 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided with the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 1528 is trained to learn patterns from unlabeled data. For instance, in embodiments where MLM 1528 implements unsupervised learning techniques, MLM 1528 identifies one or more classifications or clusters to which an input belongs. During a training phase of MLM 1528 according to unsupervised learning, MLM 1528 tries to mimic the provided training data and uses the error in its mimicked output to correct itself (i.e., correct weights and biases). In further examples, NPU 1544 perform unsupervised training of MLM 1528 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 1544 need not necessarily be present in all ML model embodiments. In embodiments where ML models are present, any one or more of processor 1510, GPU 1542, and/or NPU 1544 can be present to train and/or execute MLM 1528.

One or more wireless modems 1560 can be coupled to antenna(s) (not shown) of computing device 1502 and can support two-way communications between processor 1510 and devices external to computing device 1502 through network 1504, as would be understood to persons skilled in the relevant art(s). Wireless modem 1560 is shown generically and can include a cellular modem 1566 for communicating with one or more cellular networks, such as a GSM network for data and voice communications within a single cellular network, between cellular networks, or between the mobile device and a public switched telephone network (PSTN). In examples, wireless modem 1560 also or alternatively includes other radio-based modem types, such as a Bluetooth modem 1564 (also referred to as a "Bluetooth device") and/or Wi-Fi modem 1562 (also referred to as an "wireless adaptor"). Wi-Fi modem 1562 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 1564 is configured to communicate with another Bluetooth-capable device according to the Bluetooth short-range wireless technology standard(s) such as IEEE 802.15.1 and/or managed by the Bluetooth Special Interest Group (SIG).

Computing device 1502 can further include power supply 1582, LI receiver 1584, accelerometer 1586, and/or one or more wired interfaces 1580. Example wired interfaces 1580 include a USB port, IEEE 1594 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 1580 of computing device 1502 provide for wired connections between computing device 1502 and network 1504, or between computing device 1502 and one or more devices/peripherals when such devices/peripherals are external to computing device 1502 (e.g., a pointing device, display 1554, speaker 1552, camera 1536, physical keyboard 1538, etc.). Power supply 1582 is configured to supply power to each of the components of computing device 1502 and receives power from a battery internal to computing device 1502, and/or from a power cord plugged into a power port of computing device 1502 (e.g., a USB port, an A/C power port). LI receiver 1584 is useable for location determination of computing device 1502 and in examples includes a satellite navigation receiver such as a Global Positioning System (GPS) receiver and/or includes other type of location determiner configured to determine location of computing device 1502 based on received information (e.g., using cell tower triangulation, etc.). Accelerometer 1586, when present, is configured to determine an orientation of computing device 1502.

Note that the illustrated components of computing device 1502 are not required or all-inclusive, and fewer or greater numbers of components can be present as would be recognized by one skilled in the art. In examples, computing device 1502 includes one or more of a gyroscope, barometer, proximity sensor, ambient light sensor, digital compass, etc. In an example, processor 1510 and memory 1556 are co-located in a same semiconductor device package, such as being included together in an integrated circuit chip, FPGA, or system-on-chip (SOC), optionally along with further components of computing device 1502.

In embodiments, computing device 1502 is configured to implement any of the above-described features of flowcharts herein. Computer program logic for performing any of the operations, steps, and/or functions described herein is stored in storage 1520 and executed by processor 1510.

In some embodiments, server infrastructure 1570 is present in computing environment 1500 and is communicatively coupled with computing device 1502 via network 1504. Server infrastructure 1570, when present, is a network-accessible server set (e.g., a cloud-based environment or platform). As shown in FIG. 15, server infrastructure 1570 includes clusters 1572. Each of clusters 1572 comprises a group of one or more compute nodes and/or a group of one or more storage nodes. For example, as shown in FIG. 15, cluster 1572 includes nodes 1574. Each of nodes 1574 are accessible via network 1504 (e.g., in a "cloud-based" embodiment) to build, deploy, and manage applications and services. In examples, any of nodes 1574 is a storage node that comprises a plurality of physical storage disks, SSDs, and/or other physical storage devices that are accessible via network 1504 and are configured to store data associated with the applications and services managed by nodes 1574.

Each of nodes 1574, as a compute node, comprises one or more server computers, server systems, and/or computing devices. For instance, a node 1574 in accordance with an embodiment includes one or more of the components of computing device 1502 disclosed herein. Each of nodes 1574 is configured to execute one or more software applications (or "applications") and/or services and/or manage hardware resources (e.g., processors, memory, etc.), which are utilized by users (e.g., customers) of the network-accessible server set. In examples, as shown in FIG. 15, nodes 1574 includes a node 1546 that includes storage 1548 and/or one or more of a processor 1558 (e.g., similar to processor 1510, GPU 1542, and/or NPU 1544 of computing device 1502). Storage 1548 stores application programs 1576 and application data 1578. Processor(s) 1558 operate application programs 1576 which access and/or generate related application data 1578. In an implementation, nodes such as node 1546 of nodes 1574 operate or comprise one or more virtual machines, with each virtual machine emulating a system architecture (e.g., an operating system), in an isolated manner, upon which applications such as application programs 1576 are executed.

In embodiments, one or more of clusters 1572 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 1572 are included in a datacenter in a distributed collection of datacenters. In embodiments, exemplary computing environment 1500 comprises part of a cloud-based platform.

In an embodiment, computing device 1502 accesses application programs 1576 for execution in any manner, such as by a client application and/or a browser at computing device 1502.

In an example, for purposes of network (e.g., cloud) backup and data security, computing device 1502 additionally and/or alternatively synchronizes copies of application programs 1514 and/or application data 1516 to be stored at network-based server infrastructure 1570 as application programs 1576 and/or application data 1578. In examples, operating system 1512 and/or application programs 1514 include a file hosting service client configured to synchronize applications and/or data stored in storage 1520 at network-based server infrastructure 1570.

In some embodiments, on-premises servers 1592 are present in computing environment 1500 and are communicatively coupled with computing device 1502 via network 1504. On-premises servers 1592, when present, are hosted within an organization's infrastructure and, in many cases, physically onsite of a facility of that organization. On-premises servers 1592 are controlled, administered, and maintained by IT (Information Technology) personnel of the organization or an IT partner to the organization. Application data 1598 can be shared by on-premises servers 1592 between computing devices of the organization, including computing device 1502 (when part of an organization) through a local network of the organization, and/or through further networks accessible to the organization (including the Internet). Furthermore, in examples, on-premises servers 1592 serve applications such as application programs 1596 to the computing devices of the organization, including computing device 1502. Accordingly, in examples, on-premises servers 1592 include storage 1594 (which includes one or more physical storage devices such as storage disks and/or SSDs) for storage of application programs 1596 and application data 1598 and include a processor 1590 (e.g., similar to processor 1510, GPU 1542, and/or NPU 1544 of computing device 1502) for execution of application programs 1596. In some embodiments, multiple processors 1590 are present for execution of application programs 1596 and/or for other purposes. In further examples, computing device 1502 is configured to synchronize copies of application programs 1514 and/or application data 1516 for spill storage at on-premises servers 1592 as application programs 1596 and/or application data 1598.

Embodiments described herein may be implemented in one or more computing device 1502, network-based server infrastructure 1570, and on-premises servers 1592. For example, in some embodiments, computing device 1502 is used to implement systems, clients, or devices, or components/subcomponents thereof, disclosed elsewhere herein. In other embodiments, a combination of computing device 1502, network-based server infrastructure 1570, and/or on-premises servers 1592 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 1520. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 1514) are stored in storage 1520. Such computer programs can also be received via wired interface(s) 1560 and/or wireless modem(s) 1560 over network 1504. Such computer programs, when executed or loaded by an application, enable computing device 1502 to implement features of embodiments discussed herein. Accordingly, such computer programs represent controllers of the computing device 1502.

Embodiments are also directed to computer program products comprising computer code or instructions stored on any computer-readable medium or computer-readable storage medium. Such computer program products include the physical storage of storage 1520 as well as further physical storage types.

### VII. Additional Example Embodiments

A method is described herein. The method is performed by an authentication service that is executing on a server device. The server device is communicatively coupled to a client computing device executing an application frontend. The method comprises: receiving, from a first instance of the application frontend, a proof code and a credential of a user account; responsive to authenticating the credential of the user account, generating an authentication artifact comprising the proof code; determining the proof code is valid, resulting in a validated authentication artifact; and transmitting the validated authentication artifact to the first instance.

In a further embodiment of the foregoing method performed by an authentication service, said determining the proof code is valid comprises: providing the proof code to an ownership validator, causing the ownership validator to determine the proof code is valid and generate the validated authentication artifact.

In a further embodiment of the foregoing method performed by an authentication service, said determining the proof code is valid comprises: transmitting the authentication artifact to the first instance; receiving the authentication artifact and the proof code from the first instance; determining the proof code is valid, resulting in the validated authentication artifact.

In a further embodiment of the foregoing method performed by an authentication service, said generating the validated authentication artifact comprises: digitally signing the authentication artifact.

In a further embodiment of the foregoing method performed by an authentication service, the method further comprises: receiving, from the first instance, an access request comprising the validated authentication artifact; determining the validated authentication artifact is valid; and transmitting a forwarded access request to the application backend, the forwarded access request indicating the validated authentication artifact is valid and causing the application backend to provide the first instance access to a resource of the application backend.

In a further embodiment of the foregoing method performed by an authentication service, the method further comprises: binding the validated authentication artifact to the first instance.

In a further embodiment of the foregoing method performed by an authentication service, the method further comprises: receiving, from a second instance of the application frontend, an access request comprising the validated authentication artifact; determining the validated authentication artifact is invalid in response to the validated authentication artifact being bound to the first instance; and denying the second instance access to the application backend.

In a further embodiment of the foregoing method performed by an authentication service, said determining the proof code is valid comprises: determining the proof code is a proof of possession of a registration key issued to the first instance by an application registration service.

In a further embodiment of the foregoing method performed by an authentication service, the authentication service further comprises the application registration service.

In a further embodiment of the foregoing method performed by an authentication service, the method further comprises: receiving, from the first instance, a registration code indicating the user account is an authorized user account of the application backend and a registration token indicating the user account is authenticated for registration by an identity provider; and responsive to validating the registration code, transmitting a registration key to the first instance.

In a further embodiment of the foregoing method performed by an authentication service, the method further comprises: receiving, from the first instance, a registration request; causing the identity provider to generate a registration token indicating the user is authenticated for registration.

In a further embodiment of the foregoing method performed by an authentication service, the method further comprises: causing an administrator computing device to provide the client computing device access to the registration code.

In a further embodiment of the foregoing method performed by an authentication service, said causing the administrator computing device to provide the registration code comprises: causing a prompt to be displayed in a user interface of the administrator computing device, the prompt comprising a request to authorize the client computing device, the application frontend, or the user account.

A system is described herein. The system comprises a server device executing an authentication service. The server device communicatively coupled to a client computing device executing a first instance of an application frontend. The authentication service is configured to execute any of the foregoing methods performed by an authentication service.

In a further embodiment of the foregoing system, the authentication service comprises an identity provider and an ownership validator.

In a further embodiment of the foregoing system, the system comprises an artifact validation service.

In a further embodiment of the foregoing system, the authentication service comprises the artifact validation service.

In a further embodiment of the foregoing system, the system comprises the resource.

A method performed by a client computing device associated with a user account is described herein. The method comprising: generating a proof code from a registration key, the proof code indicating the application backend has access to the registration key; providing the proof code and a credential of the user account to the identity provider; subsequent to the identity provider authenticating the credential of the user account, causing a ownership validator to validate the proof code; receiving a validated authentication artifact indicating the proof code is valid and the credential of the user account is authenticated; and transmitting the validated authentication artifact to the application backend.

In a further embodiment of the foregoing method performed by a client computing device, said transmitting the validated authentication artifact comprises: transmitting, to a token validation service, an access request comprising the validated authentication artifact, the access request causing the token validation service to determine the validated authentication artifact is valid and, subsequent to the determination, forward the access request to the application backend.

In a further embodiment of the foregoing method performed by a client computing device, the method further comprises: providing a registration code to an application registration service, the registration code indicating the user account is an authorized user account of the application backend; and responsive to the application registration service validating the registration code, receiving the registration key.

In a further embodiment of the foregoing method performed by a client computing device, said causing the ownership validator to validate the proof code is valid comprises: causing the ownership validator to determine the proof code is a proof of possession of the registration key, without requiring the application frontend to provide the registration key to the ownership validator.

In a further embodiment of the foregoing method performed by a client computing device, said providing the proof code and the credential to the identity provider causes the identity provider to, subsequent to authenticating the credential of the user account: generate an authentication artifact; and provide the authentication artifact and the proof code to the ownership validator, causing the ownership validator to validate the proof code and generate the validated authentication artifact in response to the authentication artifact and the validation of the proof code.

In a further embodiment of the foregoing method performed by a client computing device, the validated authentication artifact is bound to a first instance of the application frontend executed by the client computing device.

A client computing device associated with a user account is described herein. The client computing device comprising a processor and a memory device. The memory device storing program instructions are structured to cause the processor to execute an application frontend to perform any of the forgoing methods performed by a client computing device.

A computer readable storage medium is described herein. The computer readable storage medium comprising programming instructions encoded thereon. The programming instructions are structured to cause a processor to perform any of the foregoing methods.

### VIII. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the discussion, unless otherwise stated, adjectives modifying a condition or relationship characteristic of a feature or features of an implementation of the disclosure, should be understood to mean that the condition or characteristic is defined to within tolerances that are acceptable for operation of the implementation for an application for which it is intended. Furthermore, if the performance of an operation is described herein as being "in response to" one or more factors, it is to be understood that the one or more factors may be regarded as a sole contributing factor for causing the operation to occur or a contributing factor along with one or more additional factors for causing the operation to occur, and that the operation may occur at any time upon or after establishment of the one or more factors. Still further, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

Numerous example embodiments have been described above. Any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

Furthermore, example embodiments have been described above with respect to one or more running examples. Such running examples describe one or more particular implementations of the example embodiments; however, embodiments described herein are not limited to these particular implementations.

Moreover, according to the described embodiments and techniques, any components of systems, applications (e.g., frontends or backends), computing devices, artifact validators, application registration services, identity providers, ownership validators, resources, and their functions may be caused to be activated for operation/performance thereof based on other operations, functions, actions, and/or the like, including initialization, completion, and/or performance of the operations, functions, actions, and/or the like.

In some example embodiments, one or more of the operations of the flowcharts described herein may not be performed. Moreover, operations in addition to or in lieu of the operations of the flowcharts described herein may be performed. Further, in some example embodiments, one or more of the operations of the flowcharts described herein may be performed out of order, in an alternate sequence, or partially (or completely) concurrently with each other or with other operations.

The embodiments described herein and/or any further systems, sub-systems, devices and/or components disclosed herein may be implemented in hardware (e.g., hardware logic/electrical circuitry), or any combination of hardware with software (computer program code configured to be executed in one or more processors or processing devices) and/or firmware.

While various embodiments have been described above, it should be understood that they have been presented by way of example only, and not limitation. It will be apparent to persons skilled in the relevant art that various changes in form and detail can be made therein without departing from the scope of the embodiments. Thus, the breadth and scope of the embodiments should not be limited by any of the above-described example embodiments, but should be defined only in accordance with the following claims and their equivalents.

## Claims

1. A system (100, 1300, 1500) comprising:
a server device (108, 1546, 1592) executing an authentication service (130), the server device (108) communicatively coupled to a client computing device (102) executing a first instance of an application frontend (114), the authentication service (130) comprising:
an identity provider (122) that:
receives, from the first instance (114), a proof code (702) and a credential of a user account (128),
authenticates the credential of the user account (128), and
transmits, to the first instance (114), an authentication artifact (714) comprising the proof code (702), the authentication artifact (714) indicating the credential of the user account (128) is authenticated; and an ownership validator (124) that:
receives the authentication artifact (714) from the first instance (114),
responsive to determining the proof code (702) is valid, digitally signs the authentication artifact (714), resulting in a signed authentication artifact (720), and
transmits the signed authentication artifact (720) to the first instance (114).

2. The system of claim 1, further comprising an artifact validator that:
receives, from the first instance, an access request comprising the signed authentication artifact;
determines the signed authentication artifact is valid; and
forwards the access request to the application backend, the forwarded access request indicating the signed authentication artifact is valid and causing the application backend to provide the first instance access to a resource of the application backend.

3. The system of claim 2, wherein the application backend is configured to deny access to the resource without validation of the signed authentication artifact by the artifact validator.

4. The system of any preceding claim, wherein the ownership validator further:
binds the signed authentication artifact to the first instance.

5. The system of claim 4, further comprising an artifact validator that:
receives, from a second instance of the application frontend, an access request comprising the signed authentication artifact;
determines the signed authentication artifact is invalid based on the signed authentication artifact being bound to the first instance; and
denies the second instance access to the application backend.

6. The system of any preceding claim, further comprising an application registration service that:
receives, from the first instance, a registration code indicating the user account is an authorized user account of the application backend; and
responsive to validating the registration code, transmits a registration key to the first instance.

7. The system of claim 6, wherein to determine the proof code is valid, the ownership validator:
determines the proof code is a proof of possession of the registration key, without requiring the first instance to provide the registration key to the ownership validator.

8. The system of claim 6 or claim 7, wherein the application registration service further:
receives, from the first instance, a registration request;
causes the identity provider to generate a registration token indicating the user account is authenticated for registration; and
causes an administrator server to provide the client computing device access to the registration code.

9. The system of claim 8, wherein to cause the administrator server to provide the client computing device access to the registration code, the application registration service further:
causes a prompt to be displayed in a user interface of an administrator computing device communicatively coupled to the administrator server, the prompt comprising a request to authorize the client computing device, the application frontend, or the user account.

10. A method (800A) performed by an authentication service that is executing on a server device, the server device communicatively coupled to a client computing device executing an application frontend, the method comprising:
receiving, from a first instance of the application frontend, a proof code and a credential of a user account (802);
responsive to authenticating the credential of the user account, generating an authentication artifact comprising the proof code (806);
determining the proof code is valid, resulting in a validated authentication artifact (808); and
transmitting the validated authentication artifact to the first instance (810).

11. The method of claim 10, wherein said determining the proof code is valid comprises:
providing the proof code to an ownership validator, causing the ownership validator to determine the proof code is valid and generate the validated authentication artifact.

12. The method of claim 10 or claim 11, further comprising:
binding the validated authentication artifact to the first instance;
receiving, from a second instance of the application frontend, an access request comprising the validated authentication artifact;
determining the validated authentication artifact is invalid based on the validated authentication artifact being bound to the first instance; and
denying the second instance access to the application backend.

13. The method of claim 14, wherein the authentication service further comprises the application registration service and the method further comprises:
receiving, from the first instance, a registration code indicating the user account is an authorized user account of the application backend and a registration token indicating the user account is authenticated for registration by an identity provider; and
responsive to validating the registration code, transmitting a registration key to the first instance.

14. A client computing device (102, 1502) associated with a user account (128), comprising:
a processor (1510); and
a memory device (1520, 1556) storing program instructions (1514, 1518) structured to cause the processor (1510) to execute an application frontend (114) to:
generate a proof code (702) from a registration key (224), the proof code (702) indicating the application frontend (114) has access to the registration key (224),
provide the proof code (702) and a credential of the user account (128) to the identity provider (122),
subsequent to the identity provider (122) authenticating the credential of the user account (128), cause an ownership validator (124) to validate the proof code (702),
receive a validated authentication artifact (720) indicating the proof code (702) is valid and the credential of the user account (128) is authenticated, and
transmit the validated authentication artifact (720) to the application backend (126).

15. The client computing device of claim 14, wherein to transmit the validated authentication artifact to the application backend, the processor executes the application frontend to:
transmit, to a token validation service, an access request comprising the validated authentication artifact, the access request causing the token validation service to determine the validated authentication artifact is valid and, subsequent to the determination, forward the access request to the application backend.
